# EUROPEAN PATENT APPLICATION

(11) **EP 4 672 852 A1**
(43) Date of publication of application: **31.12.2025**
(21) Application number: 23923275.4
(22) Date of filing: 21.02.2023
(51) Int. Cl.: H04W 76/10

(54) **WIRELESS COMMUNICATION METHOD AND APPARATUS**

(71) Applicant: Quectel Wireless Solutions Co., Ltd, Shanghai 201601 (CN)
(72) Inventor: LYU, Ling, Shanghai 201601 (CN); ZHAO, Zheng, Shanghai 201601 (CN); YANG, Zhongzhi, Shanghai 201601 (CN)
(74) Representative: Fish & Richardson P.C.
(86) International application number: PCT/CN2023/077441
(87) International publication number: WO 2024/174091

(57) **Abstract**

A wireless communication method and apparatus are provided. The method includes: determining, by a receiving device, a first transmission policy, where the first transmission policy is used to determine whether a first protocol layer submits a data packet in a first PDU set to an upper layer, and the first transmission policy is related to a type of the first PDU set.

## Description

### TECHNICAL FIELD

The present application relates to the field of communications technologies, and specifically, to a wireless communication method and apparatus.

### BACKGROUND

With the development of technologies, big data services such as extended reality (extended reality, XR) services have been emerged. At present, a protocol specifies that protocol data unit (protocol data unit, PDU) sets corresponding to such services may be classified into a plurality of types. How to transmit data based on different types of PDU sets is not clearly specified at present.

### SUMMARY

The present application provides a wireless communication method and apparatus. Several aspects related in the present application are described below.

According to a first aspect, a wireless communication method is provided, including: determining, by a receiving device, a first transmission policy, where the first transmission policy is used to determine whether a first protocol layer submits a data packet in a first PDU set to an upper layer, and the first transmission policy is related to a type of the first PDU set.

In a possible implementation, the first transmission policy includes one or more of the following: submitting a successfully received data packet to the upper layer by using the first protocol layer; skipping submitting a successfully received data packet to the upper layer by using the first protocol layer; determining, based on a first condition, whether the first protocol layer submits a successfully received data packet to the upper layer; after a data packet in the first PDU set is submitted to the upper layer by using the first protocol layer, whether to instruct a lower layer to delete a remaining data packet in the first PDU set; and after a data packet in the first PDU set is submitted to the upper layer by using the first protocol layer, submitting or skipping submitting a remaining data packet in the first PDU set to the upper layer.

In a possible implementation, the first condition is related to a first data packet, and the first data packet includes a successfully received data packet and/or an unsuccessfully received data packet in the first PDU set.

In a possible implementation, the first condition is related to one or more of the following information: a quantity of first data packets; a quantity of bits of the first data packet; a proportion of a quantity of first data packets to a total quantity of data packets in the first PDU set; a proportion of a quantity of bits of the first data packet to a total quantity of bits of data packets in the first PDU set; and a location of the first data packet in the first PDU set.

In a possible implementation, the location of the first data packet in the first PDU set includes location continuity of the first data packet in the first PDU set.

In a possible implementation, the first condition includes one or more of the following: a quantity of successfully received data packets in the first PDU set is greater than or equal to a first threshold; a quantity of unsuccessfully received data packets in the first PDU set is less than or equal to a second threshold; a quantity of bits of successfully received data packets in the first PDU set is greater than or equal to a third threshold; a quantity of bits of unsuccessfully received data packets in the first PDU set is less than or equal to a fourth threshold; a proportion of a quantity of successfully received data packets in the first PDU set to the total quantity of data packets in the first PDU set is greater than or equal to a fifth threshold; a proportion of a quantity of unsuccessfully received data packets in the first PDU set to the total quantity of data packets in the first PDU set is less than or equal to a sixth threshold; a proportion of bits of successfully received data packets in the first PDU set to a total quantity of bits of data packets in the first PDU set is greater than or equal to a seventh threshold; a proportion of bits of unsuccessfully received data packets in the first PDU set to a total quantity of bits of data packets in the first PDU set is less than or equal to an eighth threshold; a quantity of successfully received consecutive data packets in the first PDU set is greater than or equal to a ninth threshold; a quantity of unsuccessfully received data packets, whose locations are consecutive, in the first PDU set is less than or equal to a tenth threshold; a quantity of bits of successfully received data packets, whose locations are consecutive, in the first PDU set is greater than or equal to an eleventh threshold; a quantity of bits of unsuccessfully received data packets, whose locations are consecutive, in the first PDU set is less than or equal to a twelfth threshold; locations of successfully received data packets in the first PDU set are consecutive; and locations of unsuccessfully received data packets in the first PDU set are consecutive.

In a possible implementation, the method further includes: in a case that the first condition is met, submitting, by the receiving device, the successfully received data packet to the upper layer by using the first protocol layer; and/or in a case that the first condition is not met, skipping submitting, by the receiving device, the successfully received data packet to the upper layer by using the first protocol layer, and/or deleting the successfully received data packet.

In a possible implementation, the first transmission policy varies with the type of the first PDU set.

According to a second aspect, a wireless communication method is provided, including: determining, by a sending device, a second transmission policy, where the second transmission policy is used to determine a transmission manner of transmitting a data packet in a second PDU set to a receiving device, and the second transmission policy is related to a type of the second PDU set.

In a possible implementation, the second transmission policy is related to one or more of the following information: a transmission resource of the data packet; a planned delay range of the data packet; and a condition for successful transmission of the second PDU set.

In a possible implementation, the second transmission policy is related to a TB used for transmitting the data packet and/or a BLER of the transmission resource.

In a possible implementation, if the type of the second PDU set is a first type, the second transmission policy is related to one or more of the following: the TB for transmitting the data packet; the BLER of the transmission resource; and the planned delay range of the data packet.

In a possible implementation, if the type of the second PDU set is the first type, the second transmission policy includes one or more of the following: transmitting a plurality of data packets belonging to a same PDU set by using a same TB; transmitting a plurality of data packets belonging to a same PDU set by using transmission resources that are same in BLER; if it is anticipated that the sending device is incapable of completing transmission of remaining data packets in the second PDU set within the planned delay range, abandoning transmission of the remaining one or more data packets; and if a part of data packets in the second PDU set are successfully transmitted and another part of the data packets in the second PDU set are unsuccessfully transmitted, transmitting the unsuccessfully transmitted data packet by using a transmission resource having a first BLER, where the first BLER is less than or equal to a BLER of a transmission resource used for a previous transmission of a data packet.

In a possible implementation, if the type of the second PDU set is a second type, the second transmission policy is related to one or more of the following: the planned delay range of the data packet; and the condition for successful transmission of the second PDU set.

In a possible implementation, if the type of the second PDU set is the second type, the second transmission policy includes: if it is anticipated that the sending device is incapable of completing transmission of remaining data packets in the second PDU set within the planned delay range, continuing transmission of the remaining data packets; or if it is anticipated that the sending device is incapable of completing transmission of remaining data packets in the second PDU set within the planned delay range, determining, based on the condition for successful transmission of the first PDU set, whether to abandon transmission of the remaining one or more data packets.

According to a third aspect, a wireless communication method is provided, including: receiving, by a terminal device, first indication information, where the first indication information is used to indicate a type of a PDU set; where the first indication information is sent by an application server to the terminal device; and/or the first indication information is sent by an application layer of the terminal device to an access layer of the terminal device; and/or the first indication information is sent by a network device to the terminal device.

In a possible implementation, the first indication information is used to indicate a type of a PDU set corresponding to a DRB, and the type of the PDU set corresponding to the DRB is determined based on a type of a PDU set corresponding to a data flow and a correspondence between a data flow and a DRB.

In a possible implementation, the first indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

In a possible implementation, the type of the PDU set corresponding to the data flow is determined by the application layer of the terminal device and/or the application server.

In a possible implementation, if the type of the PDU set corresponding to the data flow is determined by the application layer of the terminal device, the method further includes: sending, by the terminal device, second indication information to the network device, where the second indication information is used to indicate one or more of the following: the type of the PDU set corresponding to the data flow, the type of the PDU set corresponding to the DRB, and the type of the PDU set corresponding to the first protocol entity.

In a possible implementation, if the type of the PDU set corresponding to the data flow is determined by the application server, the method further includes: receiving, by the terminal device, the first indication information sent by the network device, where the first indication information is used to indicate one or more of the following: the type of the PDU set corresponding to the data flow, the type of the PDU set corresponding to the DRB, and the type of the PDU set corresponding to the first protocol entity, and the type of the PDU set corresponding to the data flow is indicated to the network device by the application server.

In a possible implementation, the type of the PDU set corresponding to the DRB and/or the type of the PDU set corresponding to the first protocol entity are/is determined by one or more of the following: a network device, an application layer of a terminal device, and an access layer of a terminal device.

In a possible implementation, if all PDU sets corresponding to a first DRB are of a first type, the first indication information is used to indicate that a type of the PDU set corresponding to the first DRB is the first type; or if all PDU sets corresponding to a first DRB are of a second type, the first indication information is used to indicate that a type of the PDU set corresponding to the first DRB is the second type; or if a part of PDU sets corresponding to a first DRB are of a first type and another part of PDU sets are of a second type, the first indication information is used to indicate that types of PDU sets corresponding to the first DRB include the first type and the second type.

In a possible implementation, if all PDU sets corresponding to the first protocol entity are of a first type, the first indication information is used to indicate that the type of the PDU set corresponding to the first protocol entity is the first type; or if all PDU sets corresponding to the first protocol entity are of a second type, the first indication information is used to indicate that the type of the PDU set corresponding to the first protocol entity is the second type; or if a part of PDU sets corresponding to the first protocol entity are of a first type and another part of PDU sets are of a second type, the first indication information is used to indicate that types of PDU sets corresponding to the first protocol entity include the first type and the second type.

In a possible implementation, the first indication information is carried in a user plane message.

In a possible implementation, the first indication information is carried in one or more of the following: a control PDU or a data PDU.

In a possible implementation, the first indication information is carried in a header of the data PDU.

In a possible implementation, a type of each PDU set in a plurality of PDU sets is indicated by the first indication information, or a type of a PDU set whose type has changed in a plurality of PDU sets is indicated by the first indication information.

In a possible implementation, the PDU set includes an uplink PDU set and a downlink PDU set, a type of the uplink PDU set is determined by the application layer of the terminal device, and/or a type of the downlink PDU set is determined by the application server.

According to a fourth aspect, a wireless communication method is provided, including: receiving, by a network device, third indication information, where the third indication information is used to indicate a type of a PDU set; where the third indication information is sent by an application server to the network device; and/or the third indication information is sent by the terminal device to the network device.

In a possible implementation, the third indication information is used to indicate a type of a PDU set corresponding to a DRB, and the type of the PDU set corresponding to the DRB is determined based on a type of a PDU set corresponding to a data flow and a correspondence between a data flow and a DRB.

In a possible implementation, the third indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

In a possible implementation, the type of the PDU set corresponding to the data flow is determined by an application layer of the terminal device and/or the application server.

In a possible implementation, if the type of the PDU set corresponding to the data flow is determined by the application layer of the terminal device, the method further includes: receiving, by the network device, the third indication information sent by the terminal device, where the third indication information is used to indicate one or more of the following: the type of the PDU set corresponding to the data flow, the type of the PDU set corresponding to the DRB, and the type of the PDU set corresponding to the first protocol entity.

In a possible implementation, if the type of the PDU set corresponding to the data flow is determined by the application server, the method further includes: receiving, by the network device, the third indication information sent by the application server, where the third indication information is used to indicate the type of the PDU set corresponding to the data flow.

In a possible implementation, the type of the PDU set corresponding to the DRB and/or the type of the PDU set corresponding to the first protocol entity are/is determined by one or more of the following: a network device, an application layer of a terminal device, and an access layer of a terminal device.

In a possible implementation, if all PDU sets corresponding to a first DRB are of a first type, the third indication information is used to indicate that a type of the PDU set corresponding to the first DRB is the first type; or if all PDU sets corresponding to a first DRB are of a second type, the third indication information is used to indicate that a type of the PDU set corresponding to the first DRB is the second type; or if a part of PDU sets corresponding to a first DRB are of a first type and another part of the PDU sets are of a second type, the third indication information is used to indicate that the types of the PDU sets corresponding to the first DRB include the first type and the second type.

In a possible implementation, if all PDU sets corresponding to a first protocol entity are of a first type, the first indication information is used to indicate that the type of the PDU set corresponding to the first protocol entity is the first type; or if all PDU sets corresponding to a first protocol entity are of a second type, the first indication information is used to indicate that the type of the PDU set corresponding to the first protocol entity is the second type; or if a part of PDU sets corresponding to a first protocol entity are of a first type and another part of PDU sets are of a second type, the first indication information is used to indicate that types of PDU sets corresponding to the first protocol entity include the first type and the second type.

In a possible implementation, the third indication information is carried in a user plane message.

In a possible implementation, the third indication information is carried in one or more of the following: a control PDU, and a data PDU in a PDU set.

In a possible implementation, the third indication information is carried in a header of the data PDU.

In a possible implementation, a type of each PDU set in a plurality of PDU sets is indicated by the third indication information, or a type of a PDU set whose type has changed in a plurality of PDU sets is indicated by the third indication information.

In a possible implementation, the PDU set includes an uplink PDU set and a downlink PDU set, a type of the uplink PDU set is determined by an application layer of the terminal device, and/or a type of the downlink PDU set is determined by the application server.

According to a fifth aspect, a receiving device is provided, including: a determining unit, for determining a first transmission policy, where the first transmission policy is used to determine whether a first protocol layer submits a data packet in a first PDU set to an upper layer, and the first transmission policy is related to a type of the first PDU set.

In a possible implementation, the first transmission policy includes one or more of following: submitting a successfully received data packet to the upper layer by using the first protocol layer; skipping submitting a successfully received data packet to the upper layer by using the first protocol layer; determining, based on a first condition, whether the first protocol layer submits a successfully received data packet to the upper layer; after a data packet in the first PDU set is submitted to the upper layer by using the first protocol layer, whether to instruct a lower layer to delete a remaining data packet in the first PDU set; and after a data packet in the first PDU set is submitted to the upper layer by using the first protocol layer, whether to submit a remaining data packet in the first PDU set to the upper layer.

In a possible implementation, the first condition is related to a first data packet, and the first data packet includes a successfully received data packet and/or an unsuccessfully received data packet in the first PDU set.

In a possible implementation, the first condition is related to one or more of the following information: a quantity of first data packets; a quantity of bits of the first data packet; a proportion of a quantity of first data packets to a total quantity of data packets in the first PDU set; a proportion of a quantity of bits of the first data packet to a total quantity of bits of data packets in the first PDU set; and a location of the first data packet in the first PDU set.

In a possible implementation, the location of the first data packet in the first PDU set includes location continuity of the first data packet in the first PDU set.

In a possible implementation, the first condition includes one or more of the following: a quantity of successfully received data packets in the first PDU set is greater than or equal to a first threshold; a quantity of unsuccessfully received data packets in the first PDU set is less than or equal to a second threshold; a quantity of bits of successfully received data packets in the first PDU set is greater than or equal to a third threshold; a quantity of bits of unsuccessfully received data packets in the first PDU set is less than or equal to a fourth threshold; a proportion of a quantity of successfully received data packets in the first PDU set to the total quantity of data packets in the first PDU set is greater than or equal to a fifth threshold; a proportion of a quantity of unsuccessfully received data packets in the first PDU set to the total quantity of data packets in the first PDU set is less than or equal to a sixth threshold; a proportion of bits of successfully received data packets in the first PDU set to a total quantity of bits of data packets in the first PDU set is greater than or equal to a seventh threshold; a proportion of bits of unsuccessfully received data packets in the first PDU set to a total quantity of bits of data packets in the first PDU set is less than or equal to an eighth threshold; a quantity of successfully received consecutive data packets in the first PDU set is greater than or equal to a ninth threshold; a quantity of unsuccessfully received data packets, whose locations are consecutive, in the first PDU set is less than or equal to a tenth threshold; a quantity of bits of successfully received data packets, whose locations are consecutive, in the first PDU set is greater than or equal to an eleventh threshold; a quantity of bits of unsuccessfully received data packets, whose locations are consecutive, in the first PDU set is less than or equal to a twelfth threshold; locations of successfully received data packets in the first PDU set are consecutive; and locations of unsuccessfully received data packets in the first PDU set are consecutive.

In a possible implementation, the receiving device further includes a processing unit for: in a case that the first condition is met, submitting the successfully received data packet to the upper layer by using the first protocol layer; and/or in a case that the first condition is not met, skipping submitting the successfully received data packet to the upper layer by using the first protocol layer, and/or deleting the successfully received data packet.

In a possible implementation, the first transmission policy varies with the type of the first PDU set.

According to a sixth aspect, a sending device is provided, including: a determining unit, for determining a second transmission policy, where the second transmission policy is used to determine a transmission manner of transmitting a data packet in a second PDU set to a receiving device, and the second transmission policy is related to a type of the second PDU set.

In a possible implementation, the second transmission policy is related to one or more of the following information: a transmission resource of the data packet; a planned delay range of the data packet; and a condition for successful transmission of the second PDU set.

In a possible implementation, the second transmission policy is related to a TB used for transmitting the data packet and/or a BLER of the transmission resource.

In a possible implementation, if the type of the second PDU set is a first type, the second transmission policy is related to one or more of the following: the TB for transmitting the data packet; the BLER of the transmission resource; and the planned delay range of the data packet.

In a possible implementation, if the type of the second PDU set is the first type, the second transmission policy includes one or more of the following: transmitting a plurality of data packets belonging to a same PDU set by using a same transmission TB; transmitting a plurality of data packets belonging to a same PDU set by using transmission resources that are same in BLER; if it is anticipated that the sending device is incapable of completing transmission of remaining data packets in the second PDU set within the planned delay range, abandoning transmission of the remaining one or more data packets; and if a part of data packets in the second PDU set are successfully transmitted and another part of data packets are unsuccessfully transmitted, transmitting the unsuccessfully transmitted data packet by using a transmission resource having a first BLER, where the first BLER is less than or equal to a BLER of a transmission resource used by a previous transmission of a data packet.

In a possible implementation, if the type of the second PDU set is a second type, the second transmission policy is related to one or more of the following: the planned delay range of the data packet; and the condition for successful transmission of the second PDU set.

In a possible implementation, if the type of the second PDU set is the second type, the second transmission policy includes: if it is anticipated that the sending device is incapable of completing transmission of remaining data packets in the second PDU set within the planned delay range, continuing transmission of the remaining data packets; or if it is anticipated that the sending device is incapable of completing transmission of remaining data packets in the second PDU set within the planned delay range, determining, based on the condition for successful transmission of the first PDU set, whether to abandon transmission of the remaining one or more data packets.

According to a seventh aspect, a terminal device is provided, including: a receiving unit, for receiving first indication information, where the first indication information is used to indicate a type of a PDU set; where the first indication information is sent by an application server to the terminal device; and/or the first indication information is sent by an application layer of the terminal device to an access layer of the terminal device; and/or the first indication information is sent by a network device to the terminal device.

In a possible implementation, the first indication information is used to indicate a type of a PDU set corresponding to a DRB, and the type of the PDU set corresponding to the DRB is determined based on a type of a PDU set corresponding to a data flow and a correspondence between a data flow and a DRB.

In a possible implementation, the first indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

In a possible implementation, the type of the PDU set corresponding to the data flow is determined by the application layer of the terminal device and/or the application server.

In a possible implementation, if the type of the PDU set corresponding to the data flow is determined by the application layer of the terminal device, the terminal device further includes: a sending unit, for sending second indication information to the network device, where the second indication information is used to indicate one or more of the following: the type of the PDU set corresponding to the data flow, the type of the PDU set corresponding to the DRB, and the type of the PDU set corresponding to the first protocol entity.

In a possible implementation, if the type of the PDU set corresponding to the data flow is determined by the application server, the receiving unit is for: receiving the first indication information sent by the network device, where the first indication information is used to indicate one or more of the following: the type of the PDU set corresponding to the data flow, the type of the PDU set corresponding to the DRB, and the type of the PDU set corresponding to the first protocol entity, and the type of the PDU set corresponding to the data flow is indicated to the network device by the application server.

In a possible implementation, the type of the PDU set corresponding to the DRB and/or the type of the PDU set corresponding to the first protocol entity are/is determined by one or more of the following: a network device, an application layer of a terminal device, and an access layer of a terminal device.

In a possible implementation, if all PDU sets corresponding to a first DRB are of a first type, the first indication information is used to indicate that a type of the PDU set corresponding to the first DRB is the first type; or if all PDU sets corresponding to a first DRB are of a second type, the first indication information is used to indicate that a type of the PDU set corresponding to the first DRB is the second type; or if a part of PDU sets corresponding to a first DRB are of a first type and another part of PDU sets are of a second type, the first indication information is used to indicate that types of PDU sets corresponding to the first DRB include the first type and the second type.

In a possible implementation, if all PDU sets corresponding to a first protocol entity are of a first type, the first indication information is used to indicate that the type of the PDU set corresponding to the first protocol entity is the first type; or if all PDU sets corresponding to a first protocol entity are of a second type, the first indication information is used to indicate that the type of the PDU set corresponding to the first protocol entity is the second type; or if a part of PDU sets corresponding to a first protocol entity are of a first type and another part of PDU sets are of a second type, the first indication information is used to indicate that types of PDU sets corresponding to the first protocol entity include the first type and the second type.

In a possible implementation, the first indication information is carried in a user plane message.

In a possible implementation, the first indication information is carried in one or more of the following: a control PDU or a data PDU.

In a possible implementation, the first indication information is carried in a header of the data PDU.

In a possible implementation, a type of each PDU set in a plurality of PDU sets is indicated by the first indication information, or a type of a PDU set whose type has changed in a plurality of PDU sets is indicated by the first indication information.

In a possible implementation, the PDU set includes an uplink PDU set and a downlink PDU set, a type of the uplink PDU set is determined by the application layer of the terminal device, and/or a type of the downlink PDU set is determined by the application server.

According to an eighth aspect, a network device is provided, including: a receiving unit, for receiving third indication information, where the third indication information is used to indicate a type of a PDU set; where the third indication information is sent by an application server to the network device; and/or the third indication information is sent by a terminal device to the network device.

In a possible implementation, the third indication information is used to indicate a type of a PDU set corresponding to a DRB, and the type of the PDU set corresponding to the DRB is determined based on a type of a PDU set corresponding to a data flow and a correspondence between a data flow and a DRB.

In a possible implementation, the third indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

In a possible implementation, the type of the PDU set corresponding to the data flow is determined by an application layer of the terminal device and/or the application server.

In a possible implementation, if the type of the PDU set corresponding to the data flow is determined by the application layer of the terminal device, the receiving unit is further for: receiving the third indication information sent by the terminal device, where the third indication information is used to indicate one or more of the following: the type of the PDU set corresponding to the data flow, the type of the PDU set corresponding to the DRB, and the type of the PDU set corresponding to the first protocol entity.

In a possible implementation, if the type of the PDU set corresponding to the data flow is determined by the application server, the receiving unit is further for: receiving the third indication information sent by the application server, where the third indication information is used to indicate the type of the PDU set corresponding to the data flow.

In a possible implementation, the type of the PDU set corresponding to the DRB and/or the type of the PDU set corresponding to the first protocol entity are/is determined by one or more of the following: a network device, an application layer of a terminal device, and an access layer of a terminal device.

In a possible implementation, if all PDU sets corresponding to a first DRB are of a first type, the third indication information is used to indicate that a type of the PDU set corresponding to the first DRB is the first type; or if all PDU sets corresponding to a first DRB are of a second type, the third indication information is used to indicate that a type of the PDU set corresponding to the first DRB is the second type; or if a part of PDU sets corresponding to a first DRB are of a first type and another part of the PDU sets are of a second type, the third indication information is used to indicate that the types of the PDU sets corresponding to the first DRB include the first type and the second type.

In a possible implementation, if all PDU sets corresponding to a first protocol entity are of a first type, the first indication information is used to indicate that the type of the PDU set corresponding to the first protocol entity is the first type; or if all PDU sets corresponding to a first protocol entity are of a second type, the first indication information is used to indicate that the type of the PDU set corresponding to the first protocol entity is the second type; or if a part of PDU sets corresponding to a first protocol entity are of a first type and another part of PDU sets are of a second type, the first indication information is used to indicate that types of PDU sets corresponding to the first protocol entity include the first type and the second type.

In a possible implementation, the third indication information is carried in a user plane message.

In a possible implementation, the third indication information is carried in one or more of the following: a control PDU, and a data PDU in a PDU set.

In a possible implementation, the third indication information is carried in a header of the data PDU.

In a possible implementation, a type of each PDU set in a plurality of PDU sets is indicated by the third indication information, or a type of a PDU set whose type has changed in a plurality of PDU sets is indicated by the third indication information.

In a possible implementation, the PDU set includes an uplink PDU set and a downlink PDU set, a type of the uplink PDU set is determined by an application layer of the terminal device, and/or a type of the downlink PDU set is determined by the application server.

According to a ninth aspect, a receiving device is provided, including a processor and a memory. The memory is for storing one or more computer programs, and the processor is for invoking the computer program in the memory to cause the receiving device to perform some or all of the steps in the first aspect or any one of the possible implementations of the first aspect.

According to a tenth aspect, a sending device is provided, including a processor and a memory. The memory is for storing one or more computer programs, and the processor is for invoking the computer program in the memory to cause the sending device to perform some or all of the steps in the second aspect or any one of the possible implementations of the second aspect.

According to an eleventh aspect, a terminal device is provided, including a processor and a memory. The memory is for storing one or more computer programs, and the processor is for invoking the computer program in the memory to cause the terminal device to perform some or all of the steps in the first aspect or any one of the possible implementations of the first aspect.

According to a twelfth aspect, a network device is provided, including a processor and a memory. The memory is for storing one or more computer programs, and the processor is for invoking the computer program in the memory to cause the network device to perform some or all of the steps in the second aspect or any one of the possible implementations of the second aspect.

According to a thirteenth aspect, a communication system is provided. The system includes the terminal device and/or the network device described above, or the communication system may include the receiving device and/or the sending device described above. In another possible design, the system may further include another device interacting with the terminal device or the network device in the solutions provided by embodiments of the present application, or the system may further include another device interacting with the sending device or receiving device in the solutions provided by embodiments of the present application.

According to a fourteenth aspect, a computer-readable storage medium is provided. The computer-readable storage medium stores a computer program that causes a terminal to perform some or all of the steps of the method according to any one of the first to fourth aspects described above.

According to a fifteenth aspect, a computer program product is provided. The computer program product includes a non-transitory computer-readable storage medium storing a computer program. The computer program is operable to cause a terminal to perform some or all of the steps of the method of any one of the first to fourth aspects described above. In some implementations, the computer program product may be a software installation package.

According to a sixteenth aspect, a chip is provided. The chip includes a memory and a processor, and the processor is capable of invoking a computer program from the memory and running the computer program, to implement some or all of the steps of the method according to any one of the first to fourth aspects described above.

In the present application, a transmission policy related to a type of a PDU set is set, so that a receiving device and/or a sending device can make a processing policy of data clear. For example, the receiving device can properly determine whether to submit a data packet to an upper layer by using a first protocol layer, to avoid unnecessary data transmission, thereby reducing overheads. For example, the sending device can properly determine a transmission policy for transmitting a data packet to the receiving device, which helps improve a probability of successful data transmission.

### BRIEF DESCRIPTION OF THE DRAWINGS

FIG. 1 is a schematic diagram of a wireless communications system applicable to embodiments of the present application.
FIG. 2 is a schematic diagram of an image for encoding/decoding.
FIG. 3 is a schematic diagram of classifying PDU sets.
FIG. 4 is a schematic flowchart of a wireless communication method according to an embodiment of the present application.
FIG. 5 is a schematic flowchart of a wireless communication method according to another embodiment of the present application.
FIG. 6 is a schematic flowchart of a wireless communication method according to still another embodiment of the present application.
FIG. 7 is a schematic flowchart of a wireless communication method according to yet another embodiment of the present application.
FIG. 8 is a schematic flowchart of determining a type of a PDU set by an application server according to an embodiment of the present application.
FIG. 9 is a schematic flowchart of determining a type of a PDU set by a UE side according to an embodiment of the present application.
FIG. 10 is a schematic flowchart of determining a type of a downlink PDU set by an application server and determining a type of an uplink PDU set by a UE side according to an embodiment of the present application.
FIG. 11 is a schematic flowchart of indicating a type of a PDU set by using a user plane message according to an embodiment of the present application.
FIG. 12 is a schematic block diagram of a receiving device according to an embodiment of the present application.
FIG. 13 is a schematic block diagram of a sending device according to an embodiment of the present application.
FIG. 14 is a schematic block diagram of a terminal device according to an embodiment of the present application.
FIG. 15 is a schematic block diagram of a network device according to an embodiment of the present application.
FIG. 16 is a schematic structural diagram of a communications apparatus according to an embodiment of the present application.

### DETAILED DESCRIPTION OF THE EMBODIMENTS

The following describes the technical solutions in embodiments of the present application with reference to the accompanying drawings in embodiments of the present application.

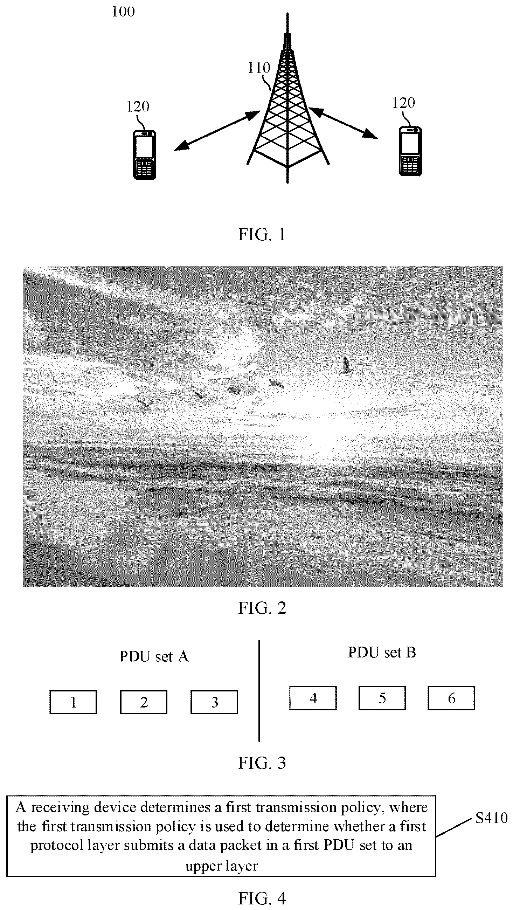

FIG. 1 shows a wireless communications system 100 to which an embodiment of the present application is applicable. The wireless communications system 100 may include a base station 110 and a terminal device 120. The base station 110 may be a device in communication with the terminal device 120. The base station 110 may provide communication coverage for a specific geographic area, and may communicate with the terminal device 120 located within the coverage.

FIG. 1 exemplarily shows one base station and two terminals. Optionally, the wireless communications system 100 may include a plurality of base stations, and another number of terminal devices may be included in coverage of each base station, which is not limited in embodiments of the present application.

Optionally, the wireless communications system 100 may further include another network entity such as a network controller and a mobility management entity. This is not limited in embodiments of the present application.

It should be understood that technical solutions of embodiments of the present application may be applied to various communications systems, such as a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in the present application may further be applied to a future communications system, such as a 6th generation mobile communications system or a satellite communications system.

The terminal device in embodiments of the present application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of the present application may be a device providing a user with voice and/or data connectivity and capable of connecting people, objects, and machines, such as a handheld device or vehicle-mounted device having a wireless connection function. The terminal device in embodiments of the present application may be a mobile phone (mobile phone), a tablet computer (Pad), a notebook computer, a palmtop computer, a mobile internet device (mobile internet device, MID), a wearable device, a virtual reality (virtual reality, VR) vehicle, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. Optionally, the UE may be used to function as a base station. For example, the UE may function as a scheduling entity to provide a sidelink signal between UEs in V2X, D2D, or the like. For example, a cellular phone and a vehicle communicate with each other by using a sidelink signal. A cellular phone and a smart household device communicate with each other, without the relay of a communication signal through a base station.

The base station in embodiments of the present application may be a device for communicating with the terminal device. The base station may also be referred to as an access network device or a wireless access network device. The base station in embodiments of the present application may refer to a radio access network (radio access network, RAN) node (or device) via which the terminal device is connected to a wireless network. The base station may broadly cover the following various names, or may be interchanged with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be refer to a communication module, a modem, or a chip disposed in the device or apparatus described above. Alternatively, the base station may be a device, that functions as a base station, in a mobile switching center, device to device D2D communications, vehicle-to-everything (vehicle-to-everything, V2X) communications, and machine-to-machine (machine-to-machine, M2M) communications, a network-side device in a 6G network, a device that functions as a base station in a future communication system, or the like. The base station may support networks with a same access technology or different access technologies. A specific technology and specific device form used by the base station are not limited in embodiments of the present application.

The base station may be fixed or mobile. For example, a helicopter or an unmanned aerial vehicle may be configured to function as a mobile base station, and one or more cells may move according to a location of the mobile base station. In another example, a helicopter or an unmanned aerial vehicle may be configured to serve as a device in communication with another base station.

In some deployments, the base station in embodiments of the present application may be a CU or a DU, or the base station includes a CU and a DU. The gNB may further include an AAU.

The base station and the terminal device may be deployed on land, including being indoors or outdoors, handheld, or in-vehicle, may be deployed on a water surface, or may be deployed on a plane, a balloon, or a satellite in the air. In embodiments of the present application, the scenarios in which the base station and the terminal device are located are not limited.

With the continuous development of wireless cellular communication technologies, especially the development of 5G technologies, spectrum efficiency thereof is increasingly high, an available frequency band is increasingly wide, and a transmission rate of data is increasingly high. Therefore, supporting big data services (such as XR services) by using the cellular communication technologies is becoming more feasible. The development of XR and the development of 5G networks promote each other, which leads to a positive circulation. Generally, an XR service of one user requires a transmission rate of 30 Mbps to 200 Mbps, and one cell is required to support at least 10 terminals to simultaneously perform the XR service. Only a 5G network can provide such a large transmission capacity. In addition, compared with previous wireless networks, a 5G cellular network can provide a greatly increased transmission capacity. In addition, existing mainstream services cannot make full use of the network capacity, resulting in a vacant network transmission capacity, and therefore a new service is objectively required to make full use of the 5G network, so as to cause the 5G network to be widely used and have better performance.

Taking an XR service as an example. Main data of the XR service is video service data. A video is encoded by a source and then is transmitted through a wireless cellular network. Usually, an encoder (for example, a source encoder or an image encoder), when encoding a video, may first recognize an outline of the video and encode some pictures that are similar to obtain a same group of data. The data in a same group are interdependent with each other, and the data in different groups are substantially independent of each other.

Taking FIG. 2 as an example. The encoder may encode the blue sky part to obtain a group of data packets, encode the beach part to obtain a group of data packets, and encode the seawater part to obtain a group of data packets. On this basis, fine encoding is performed on the seagulls, white clouds, and other parts.

Data packets generated by the encoder have a characteristic of PDU sets (sets). Taking FIG. 3 as an example. Among data packets corresponding to a same service, data packets 1, 2, and 3 belong to a PDU set A, and data packets 4, 5, and 6 belong to a PDU set B.

Taking the XR service as an example. Currently, a protocol specifies that PDU sets may be classified into two types, which are referred to as class A and class B. For a class-A PDU set, if a part of data in the PDU set is not successfully received, a receiver (or a receiver device or a receiving device) receives only a part of data packets in the PDU set, which is of no use to the receiver, and the receiver may not be able to obtain a corresponding image by decoding by using the part of data packets. Therefore, for the class-A PDU set, the receiver usually needs to receive all data packets in the class-A PDU set before it can obtain the corresponding image by decoding. For a class-B data packet, if a part of data packets in the PDU set is unsuccessfully received, the receiver can still obtain a corresponding image through decoding, that is, even if the receiver receives only a part of data packets in the PDU set, the receiver can obtain the corresponding image through decoding, but with lower image quality.

In addition, regarding whether data packets are submitted in sequence, the encoder and a decoder require that "it should be better to submit data packets in sequence, but not at the cost of delay requirements". The submission in sequence may include submission of data packets in sequence and/or submission of class-A data packets first and then submission of class-B data packets, and the like.

Taking FIG. 3 as an example. It is assumed that the receiver has successfully received data packets 1, 2, 4, 5, and 6, and has not properly received the data packet 3, and the receiver decoder requires that data packets in the PDU set A are useful only in a case that all data packets in the PDU set A are received. In this case, the receiver should try to submit (or transmit) data packets in the PDU set A to an upper layer first, and then submit data packets in the PDU set B to the upper layer. The receiver submits the data packets in the PDU set B to the upper layer in a case of indeed being unable to receiving the data packet 3.

The submitting a data packet to the upper layer may mean that a first protocol layer of the receiver submits a data packet to the upper layer. A protocol stack may be divided into different protocol layers according to different division manners. Examples are given below for description.

In an example, the protocol stack may include an L1 layer, an L2 layer, and an L3 layer. The L1 layer may be understood as a physical layer, the L2 layer may be understood as a data link layer, and the L3 layer may be understood as a network layer. The L2 layer may include one or more of a media access control (medium access control, MAC) sublayer, a radio link control (radio link control, RLC) sublayer, a broadcast/multicast control (broadcast/multicast control BMC) sublayer, and a packet data convergence protocol (packet data convergence protocol, PDCP) sublayer. The L3 layer may include one or more of a radio resource control (radio resource control, RRC) sublayer, a mobility management (mobility management, MM) sublayer of a non-access layer, and a call control (call control, CC) sublayer. In this case, the first protocol layer may include an L1 layer and/or an L2 layer. If the first protocol layer includes the L1 layer, the submitting a data packet to the upper layer may include submitting a data packet by the L1 layer to the L2 layer. If the first protocol layer includes the L2 layer, the submitting a data packet to the upper layer may include submitting a data packet by the L2 layer to the L3 layer.

In another example, the protocol stack may be a seven-layer protocol stack. For example, the protocol stack may include a physical layer, a data link layer, a network layer, a transport layer, a session layer, a presentation layer, and an application layer. The first protocol layer may include one or more of the physical layer, the data link layer, the network layer, the transport layer, the session layer, or the presentation layer. If the first protocol layer includes the physical layer, the submitting a data packet to the upper layer may include submitting a data packet by the physical layer to the data link layer. If the first protocol layer includes the data link layer, the submitting a data packet to the upper layer may include submitting a data packet by the data link layer to the network layer. If the first protocol layer includes the network layer, the submitting a data packet to the upper layer may include submitting a data packet by the network layer to the transport layer. If the first protocol layer includes the transport layer, the submitting a data packet to the upper layer may include submitting a data packet by the transport layer to the session layer. If the first protocol layer includes the session layer, the submitting a data packet to the upper layer may include submitting a data packet by the session layer to the presentation layer. If the first protocol layer includes the presentation layer, the submitting a data packet to the upper layer may include submitting a data packet by the presentation layer to the application layer.

In another example, the protocol stack may be a four-layer protocol stack. For example, the protocol stack may include a link layer, a network layer, a transport layer, and an application layer. The first protocol stack may include one or more of the link layer, the network layer, and the transport layer. If the first protocol stack includes the link layer, the submitting a data packet to the upper layer may include submitting a data packet by the link layer to the network layer. If the first protocol stack includes the network layer, the submitting a data packet to the upper layer may include submitting a data packet by the network layer to the transport layer. If the first protocol stack includes the transport layer, the submitting a data packet to the upper layer may include submitting a data packet by the transport layer to the application layer.

A sender related above may be a terminal device and/or a network device, and the receiver may be a terminal device and/or a network device. For example, for downlink, the sender is a network device, and the receiver is a terminal device; for uplink, the sender is a terminal device, and the receiver is a network device.

Currently, a protocol specifies only that PDU sets may be classified into two types, but does not clearly specify how to indicate a type of a PDU set to the terminal device and/or the network device.

In addition, in a case that PDU sets are of different types, there is no clear specification on how to transmit data by the receiver and/or the sender.

In view of one or more of the problems described above, embodiments of the present application provide a wireless communication method and apparatus. A wireless communication method provided in an embodiment of the present application is described below with reference to FIG. 4.

Referring to FIG. 4, in step S410, a receiving device determines a first transmission policy, where the first transmission policy is used to determine whether a first protocol layer submits a data packet in a first PDU set to an upper layer.

The receiving device is not specifically limited in embodiments of the present application. For example, the receiving device may be a terminal device. For another example, the receiving device may be a network device such as a base station.

In some embodiments, the first transmission policy may be autonomously determined by the receiving device, or the first transmission policy may be indicated to the receiving device by another device, or the first transmission policy may be predefined in a protocol. For example, if the receiving device is a network device, the network device may autonomously determine the first transmission policy. For another example, if the receiving device is a terminal device, the terminal device may determine the first transmission policy according to an indication from the network device. For example, the network device may send indication information to the terminal device, and the indication information is used to indicate the first transmission policy.

In some embodiments, the first PDU set may have the following characteristic: A part of data packets in the first PDU set are successfully received by the receiving device and another part of the data packets in the first PDU set are not successfully received by the receiving device. That is, only a part of data packets in the first PDU set are successfully transmitted to the receiving device, and another part of data packets in the first PDU set are not successfully transmitted to the receiving device yet.

In some embodiments, the first transmission policy may be related to a type of the first PDU set. The first transmission policy may vary with the type of the first PDU set. The first PDU set may be of a plurality of types. For example, the first PDU set may be of a first type or a second type. The first type may be class A described above, and the second type may be class B described above. Certainly, the first PDU set may alternatively be of more types. For example, the first PDU set may be of three types or the like.

In some implementations, the first transmission policy may include: submitting a successfully received data packet to the upper layer by using a first protocol layer. If the first transmission policy includes: submitting the successfully received data packet to the upper layer by using the first protocol layer, the receiving device may directly submit the successfully received data packet to the upper layer through the first protocol layer.

In some embodiments, the first transmission policy may include: skipping submitting a successfully received data packet to the upper layer by using the first protocol layer. If the first transmission policy includes: skipping submitting the successfully received data packet to the upper layer by using the first protocol layer, the receiving device may not submit the successfully received data packet to the upper layer through the first protocol layer after receiving a part of data packets in the first PDU set.

In some embodiments, the first transmission policy may include: determining, based on a first condition, whether the first protocol layer submits the successfully received data packet to the upper layer. The first condition is not specifically limited in embodiments of the present application, and the first condition may be a condition that triggers the first protocol layer to submit the successfully received data packet to the upper layer, or the first condition may be a condition that triggers the first protocol layer not to submit the successfully received data packet to the upper layer. In some embodiments, in a case that the first condition is met, the receiving device may submit the successfully received data packet to the upper layer by using the first protocol layer, or in a case that the first condition is not met, the receiving device may not submit the successfully received data packet to the upper layer through the first protocol layer. In some other embodiments, in a case that the first condition is met, the receiving device may not submit the successfully received data packet to the upper layer through the first protocol layer, or in a case that the first condition is met, the receiving device may submit the successfully received data packet to the upper layer through the first protocol layer.

In some embodiments, the first transmission policy may include: after a part of data packets in the first PDU set are submitted to the upper layer through the first protocol layer, whether to instruct a lower layer to delete a remaining data packet in the first PDU set. The remaining data packet may include incompletely received PDU fragments and/or completely received PDUs. If the first transmission policy includes: instructing the lower layer to delete a remaining data packet in the first PDU set, the lower layer, after receiving a remaining data packet in the first PDU set, directly deletes the remaining data packet instead of submitting the remaining data packet to the first protocol layer,. If the first transmission policy includes: instructing the lower layer not to delete the remaining data packet in the first PDU set, the lower layer, after receiving a remaining data packet in the first PDU set, continues to submit the remaining data packet to the first protocol layer.

Whether to instruct the lower layer to delete the remaining data packet in the first PDU set may be determined based on a second condition, and the second condition may be related to a condition on which the first PDU set can be correctly decoded. For example, the first PDU set includes 100 data packets, and the first PDU set can be correctly decoded if a quantity of data packets exceeds 80. If the first protocol layer has submitted 80 data packets to the upper layer, the first protocol layer may instruct the lower layer to delete remaining data packets in the first PDU set. If a quantity of data packets submitted by the first protocol layer to the upper layer is less than 80, the first protocol layer may instruct the lower layer not to delete remaining data packets in the first PDU set or continue to submit remaining data packets in the first PDU set to the first protocol layer.

In some embodiments, the first transmission policy may include: after a part of data packets in the first PDU set are submitted to the upper layer through the first protocol layer, whether to submit a remaining data packet in the first PDU set to the upper layer. After the first protocol layer submits a part of data packets in the first PDU set to the upper layer, if a remaining data packet in the first PDU set is subsequently received, the first protocol layer may determine whether to continue to submit the remaining data packet in the first PDU set to the upper layer.

Whether to continue to submit a remaining data packets in the first PDU set to the upper layer may be determined based on a last submittable time of the first PDU set. For example, if a remaining data packet is received after the last submittable time of the first PDU set, the first protocol layer may not submit the remaining data packet to the upper layer and delete the remaining data packet. For another example, if a remaining data packet is received before the last submittable time of the first PDU set, the first protocol layer may submit the remaining data packet to the upper layer.

In some embodiments, if a time at which the first protocol layer submits a part of data packets in the first PDU set to the upper layer is the last submittable time of the first PDU set, the first protocol layer may instruct the lower layer to delete a remaining data packet and/or a remaining data packet fragment in the first PDU set. If the time at which the first protocol layer submits a part of data packets in the first PDU set to the upper layer is before the last submittable time of the first PDU set, the first protocol layer may not instruct the lower layer to delete the remaining data packet and/or the remaining data packet fragment in the first PDU set. Next, if the first protocol layer receives a data packet, submitted by the lower layer, in the first PDU set again, and the first protocol layer has not submitted the data packet to the upper layer, the first protocol layer submits the data packet to the upper layer until the last submittable time of the first PDU set arrives. When the last submittable time of the first PDU set arrives, the first protocol layer may instruct the lower layer to delete the data packet in the first PDU set and/or data packet fragments that have not been successfully reassembled.

In some embodiments, when the first protocol layer submits data packets to the upper layer, the first protocol layer may submit the data packets based on serial numbers (serial numbers, SNs) of the data packets.

The first condition is described in detail below. The following is described by using an example in which the first condition is a condition for triggering the first protocol layer to submit the successfully received data packet to the upper layer.

In some embodiments, the first condition may be related to a first data packet, and the first data packet may include a successfully received data packet and/or an unsuccessfully received data packet in the first PDU set. In other words, the first condition may be related to a successfully received data packet in the first PDU set, and/or the first condition may be related to an unsuccessfully received data packet in the first PDU set.

In some embodiments, the first condition may be related to one or more of the following information: a quantity of first data packets; a quantity of bits of the first data packet; a proportion of a quantity of first data packets to a total quantity of data packets in the first PDU set; a proportion of a quantity of bits of the first data packet to a total quantity of bits of data packets in the first PDU set; and a location of the first data packet in the first PDU set.

In some embodiments, the first condition may be related to the quantity of first data packets. For example, the first condition may include: the quantity of first data packets is greater than or equal to a preset threshold. To be specific, the first condition may include: a quantity of successfully received data packets in the first PDU set is greater than or equal to a preset threshold, or the first condition may include: a quantity of unsuccessfully received data packets in the first PDU set is less than or equal to a preset threshold. For another example, the first condition may include: the quantity of first data packets is less than or equal to a preset threshold. To be specific, the first condition may include: a quantity of successfully received data packets in the first PDU set is less than or equal to a preset threshold, or the first condition may include: a quantity of unsuccessfully received data packets in the first PDU set is less than or equal to a preset threshold.

In some embodiments, the first condition may be related to the quantity of bits of the first data packet. For example, the first condition may include: the quantity of bits of the first data packet is greater than or equal to a preset threshold. To be specific, the first condition may include: a quantity of bits of a successfully received data packet in the first PDU set is greater than or equal to a preset threshold, or the first condition may include: a quantity of bits of an unsuccessfully received data packet in the first PDU set is less than or equal to a preset threshold. For another example, the first condition may include: the quantity of bits of the first data packet is less than or equal to a preset threshold. To be specific, the first condition may include: a quantity of bits of a successfully received data packet in the first PDU set is less than or equal to a preset threshold, or the first condition may include: a quantity of bits of an unsuccessfully received data packet in the first PDU set is less than or equal to a preset threshold.

Different data packets in the first PDU set may be the same or different in quantity of bits, which is not specifically limited in embodiments of the present application.

In some embodiments, the first condition may be related to the proportion of the quantity of first data packets to the total quantity of data packets in the first PDU set. For example, the first condition may include: the proportion of the quantity of first data packets to the total quantity of data packets in the first PDU set is greater than or equal to a preset threshold. For another example, the first condition may include: the proportion of the quantity of first data packets to the total quantity of data packets in the first PDU set is less than or equal to a preset threshold.

The proportion of the quantity of first data packets to the total quantity of data packets in the first PDU set may include a proportion (referred to as a first proportion below) of a quantity of successfully received data packets in the first PDU set to the total quantity of data packets in the first PDU set, and/or a proportion (referred to as a second proportion below) of a quantity of unsuccessfully received data packets in the first PDU set to the total quantity of data packets in the first PDU set. In some embodiments, the first condition may include: the first proportion is greater than or equal to a preset threshold, or the first condition may include: the second proportion is less than or equal to a preset threshold. In some embodiments, the first condition may include: the first proportion is less than or equal to a preset threshold, or the first condition may include: the second proportion is less than or equal to a preset threshold.

In some embodiments, the first condition may be related to the quantity of bits of the first data packet. For example, the first condition may include: the quantity of bits of the first data packet is greater than or equal to a preset threshold. To be specific, the first condition may include: a quantity of bits of a successfully received data packet in the first PDU set is greater than or equal to a preset threshold, or the first condition may include: a quantity of bits of an unsuccessfully received data packet in the first PDU set is less than or equal to a preset threshold. For another example, the first condition may include: the quantity of bits of the first data packet is less than or equal to a preset threshold. To be specific, the first condition may include: a quantity of bits of a successfully received data packet in the first PDU set is less than or equal to a preset threshold, or the first condition may include: a quantity of bits of an unsuccessfully received data packet in the first PDU set is less than or equal to a preset threshold.

In some embodiments, the first condition may be related to the proportion of the quantity of bits of the first data packet to the total quantity of bits of data packets in the first PDU set. For example, the first condition may include: the proportion of the quantity of bits of the first data packet to the total quantity of bits of data packets in the first PDU set is greater than or equal to a preset threshold. For another example, the first condition may include: the proportion of the quantity of bits of the first data packet to the total quantity of bits of data packets in the first PDU set is less than or equal to a preset threshold.

The proportion of the quantity of bits of the first data packet to the total quantity of bits of data packets in the first PDU set may include a proportion (referred to as a third proportion below) of a quantity of bits of a successfully received data packet in the first PDU set to the total quantity of bits of data packets in the first PDU set, and/or a proportion (referred to as a fourth proportion below) of a quantity of bits of an unsuccessfully received data packet in the first PDU set to the total quantity of bits of data packets in the first PDU set. In some embodiments, the first condition may include: the third proportion is greater than or equal to a preset threshold, or the first condition may include: the fourth proportion is greater than or equal to a preset threshold. In some embodiments, the first condition may include: the third proportion is less than or equal to a preset threshold, or the first condition may include: the fourth proportion is less than or equal to a preset threshold.

In some embodiments, the first condition may be related to the location of the first data packet in the first PDU set. For example, the first condition may include: the location of the first data packet in the first PDU set is a preset location. For another example, the location of the first data packet in the first PDU set may include location continuity of the first data packet in the first PDU set, that is, the first condition is related to location continuity of the first data packet.

In some embodiments, the first condition may be related to the location continuity of the first data packets. For example, the first condition may include: locations of the first data packets are consecutive. To be specific, the first condition may include: locations of successfully received data packets in the first PDU set are consecutive, or the first condition may include: locations of unsuccessfully received data packets in the first PDU set are consecutive. For another example, the first condition may include: locations of the first data packets are inconsecutive. To be specific, the first condition may include: locations of successfully received data packets in the first PDU set are inconsecutive, or the first condition may include: locations of unsuccessfully received data packets in the first PDU set are inconsecutive.

It can be learned from the foregoing description that, in some embodiments, the receiving device may submit the successfully received data packet to the upper layer through the first protocol layer in a case that the first condition is met, and/or the receiving device may not submit the successfully received data packet to the upper layer through the first protocol layer in a case that the first condition is not met, . In embodiments of the present application, the first condition may also be referred to as a condition for triggering the first protocol layer to submit the successfully received data packet to the upper layer.

In some embodiments, the first condition may include one or more of the following: a quantity of successfully received data packets in the first PDU set is greater than or equal to a first threshold; a quantity of unsuccessfully received data packets in the first PDU set is less than or equal to a second threshold; a quantity of bits of successfully received data packets in the first PDU set is greater than or equal to a third threshold; a quantity of bits of unsuccessfully received data packets in the first PDU set is less than or equal to a fourth threshold; a proportion of a quantity of successfully received data packets in the first PDU set to the total quantity of data packets in the first PDU set is greater than or equal to a fifth threshold; a proportion of a quantity of unsuccessfully received data packets in the first PDU set to the total quantity of data packets in the first PDU set is less than or equal to a sixth threshold; a proportion of bits of successfully received data packets in the first PDU set to a total quantity of bits of data packets in the first PDU set is greater than or equal to a seventh threshold; a proportion of bits of unsuccessfully received data packets in the first PDU set to a total quantity of bits of data packets in the first PDU set is less than or equal to an eighth threshold; a quantity of successfully received consecutive data packets in the first PDU set is greater than or equal to a ninth threshold; a quantity of unsuccessfully received data packets, whose locations are consecutive, in the first PDU set is less than or equal to a tenth threshold; a quantity of bits of successfully received data packets, whose locations are consecutive, in the first PDU set is greater than or equal to an eleventh threshold; a quantity of bits of unsuccessfully received data packets, whose locations are consecutive, in the first PDU set is less than or equal to a twelfth threshold; locations of successfully received data packets in the first PDU set are consecutive; and locations of unsuccessfully received data packets in the first PDU set are consecutive.

The first conditions described above may be used alone or in combination with each other, which is not specifically limited in embodiments of the present application. For example, the first condition may include: the quantity of successfully received data packets in the first PDU set is greater than or equal to the first threshold, and the quantity of bits of successfully received data packets in the first PDU set is greater than or equal to the third threshold.

It can be learned from the foregoing description that, the first transmission policy may vary with the type of the first PDU set. For example, the first transmission policy includes: determining whether the first protocol layer submits a successfully received data packet to the upper layer based on the first condition, and the first type may vary with the type of the first PDU set.

In some embodiments, different condition thresholds may be set for different types of the first PDU sets, and the condition threshold may be one or more of the first threshold to the twelfth threshold described above. Examples are given below for description.

If the type of the first PDU set is a first type, the first condition may include one or more of the following:
condition 1A: a quantity of successfully received data packets in a PDU set is greater than or equal to P1;
condition 2A: a quantity of unsuccessfully received data packets in a PDU set is less than or equal to P2;
condition 3A: a quantity of bits of a successfully received data packet in a PDU set is greater than or equal to P3;
condition 4A: a quantity of bits of an unsuccessfully received data packet in a PDU set is less than or equal to P4;
condition 5A: a proportion of a quantity of successfully received data packets in a PDU set to a total quantity of data packets in the PDU set is greater than or equal to P5%;
condition 6A: a proportion of a quantity of unsuccessfully received data packets in a PDU set to a total quantity of data packets in the PDU set is less than or equal to P6%;
condition 7A: a proportion of a quantity of bits of a successfully received data packet in a PDU set to a total quantity of bits of data packets in the PDU set is greater than or equal to P7%;
condition 8A: a proportion of a quantity of bits of an unsuccessfully received data packet in a PDU set to a total quantity of bits of data packets in the PDU set is less than or equal to P8%;
condition 9A: locations of successfully received data packets in a PDU set are consecutive;
condition 10A: locations of unsuccessfully received data packets in a PDU set are consecutive;
condition 11A: a quantity of successfully received data packets, whose locations are inconsecutive, in a PDU set is greater than or equal to N1;
condition 12A: a quantity of unsuccessfully received data packets, whose locations are consecutive, in a PDU set is less than or equal to N2;
condition 13A: a quantity of bits of successfully received data packets, whose locations are consecutive, in a PDU set is greater than or equal to N3; and
condition 14A: a quantity of bits of unsuccessfully received data packets, whose locations are consecutive, in a PDU set is less than or equal to N4.

The conditions described above may be used alone or in combination with each other. For example, one or more of the conditions 1A to 8A may be used in combination with one or more of the conditions 9A to 14A.

If the type of the first PDU set is a second type, the first condition may include one or more of the following:
condition 1B: a quantity of successfully received data packets in a PDU set is greater than or equal to K1;
condition 2B: a quantity of unsuccessfully received data packets in a PDU set is less than or equal to K2;
condition 3B: a quantity of bits of a successfully received data packet in a PDU set is greater than or equal to K3;
condition 4B: a quantity of bits of an unsuccessfully received data packet in a PDU set is less than or equal to K4;
condition 5B: a proportion of a quantity of successfully received data packets in a PDU set to a total quantity of data packets in the PDU set is greater than or equal to K5%;
condition 6B: a proportion of a quantity of unsuccessfully received data packets in a PDU set to a total quantity of data packets in the PDU set is less than or equal to K6%;
condition 7B: a proportion of a quantity of bits of a successfully received data packet in a PDU set to a total quantity of bits of data packets in the PDU set is greater than or equal to K7%;
condition 8B: a proportion of a quantity of bits of an unsuccessfully received data packet in a PDU set to a total quantity of bits of data packets in the PDU set is less than or equal to K8%;
condition 9B: locations of successfully received data packets in one PDU set are consecutive;
condition 10B: locations of unsuccessfully received data packets in one PDU set are consecutive;
condition 11B: a quantity of successfully received data packets, whose locations are consecutive, in a PDU set is greater than or equal to M1;
condition 12B: a quantity of unsuccessfully received data packets, whose locations are consecutive, in a PDU set is less than or equal to M2;
condition 13B: a quantity of bits of successfully received data packets, whose locations are consecutive, in a PDU set is greater than or equal to M3; and
condition 14B: a quantity of bits of unsuccessfully received data packets, whose locations are consecutive, in a PDU set is less than or equal to M4.

The conditions described above may be used alone or in combination with each other. For example, one or more of the conditions 1B to 8B may be used in combination with one or more of the conditions 9B to 14B.

In some embodiments, if the receiving device determines not to submit the successfully received data packet to the upper layer through the first protocol layer, the receiving device may discard the received data packet or not discard the received data packet. Whether to discard the received data packet may be autonomously determined by the receiving device, or may be indicated to the receiving device by another device, or may be predefined in a protocol. For example, if the receiving device is the terminal device, the network device may indicate, to the terminal device, whether to discard the received data packet.

The first condition may be valid only for received data, or may be valid for both received data and sent data. For example, if the receiving device is the terminal device, the network device may indicate, to the terminal device, that the first condition is valid only for downlink data, or may indicate, to the terminal device, that the first condition is valid for both uplink data and downlink data, or may not indicate to the terminal device. If the network device does not indicate, to the terminal device, whether the first condition is valid for both uplink data and downlink data, the terminal device may determine, by default, that the first condition is valid for both uplink data and downlink data.

That the first condition is valid for sent data may be understood as: the terminal device or the network device may determine a transmission policy for sent data based on the first condition.

A process of sending data is described below.

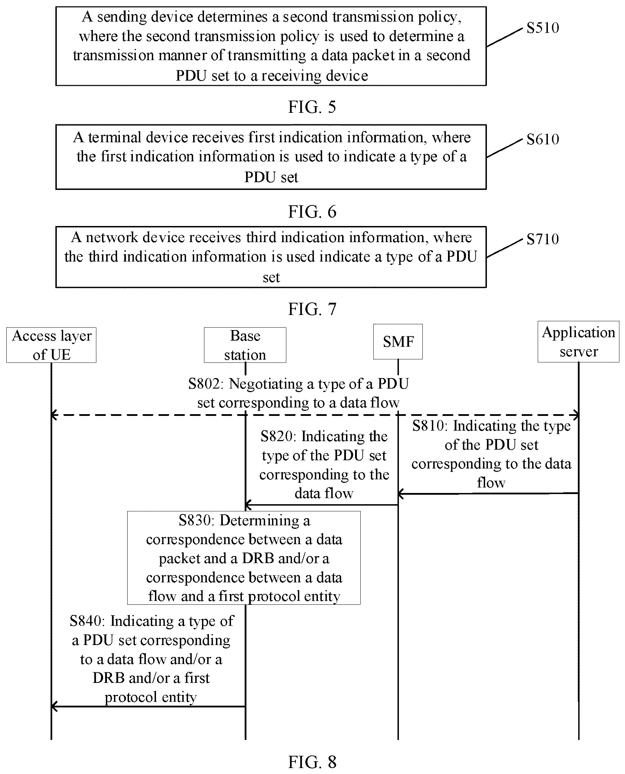

FIG. 5 is a schematic flowchart of another wireless communication method according to an embodiment of the present application.

Referring to FIG. 5, in step S510, a sending device determines a second transmission policy, where the second transmission policy is used to determine a transmission manner of transmitting a data packet in a second PDU set to a receiving device.

The sending device is not specifically limited in embodiments of the present application. For example, the sending device may be a terminal device. For another example, the sending device may be a network device such as a base station.

In some embodiments, the second transmission policy may be autonomously determined by the sending device, or the first transmission policy may be indicated to the sending device by another device, or the first transmission policy may be predefined in a protocol. For example, if the sending device is a network device, the network device may autonomously determine the first transmission policy. For another example, if the sending device is a terminal device, the terminal device may determine the first transmission policy according to an indication from the network device. For example, the network device may send indication information to the terminal device, and the indication information is used to indicate the second transmission policy.

In some embodiments, the first PDU set may have the following characteristic: The sending device successfully sends a part of data packets in the first PDU set and another part of the data packets are not successfully sent. That is only a part of data packets in the first PDU set are successfully transmitted to the receiving device, and another part of the data packets are not successfully transmitted to the receiving device yet.

In some embodiments, the second transmission policy may be related to a type of the second PDU set. The second transmission policy may vary with the type of the second PDU set. The second PDU set may be of a plurality of types, for example, the second PDU set may be of a first type or a second type. The first type may be the class A described above, and the second type may be the class B described above. Certainly, the second PDU set may alternatively be of more types, for example, the second PDU set may be of three types or the like.

In some embodiments, the second transmission policy may be related to one or more of the following information: a transmission resource of the data packet; a planned delay range of the data packet; a condition for successful transmission of the second PDU set; or whether to discard transmission of a remaining data packet.

In some embodiments, the second transmission policy may be related to the transmission resource of the data packet. The transmission resource of the data packet may include a transport block (transport block, TB) used for transmitting the data packet and/or a block error rate (block error rate, BLER) of the transmission resource of the data packet. In other words, the second transmission policy may be related to the TB used for transmitting the data packet, and/or the second transmission policy may be related to the BLER of the transmission resource of the data packet.

In some embodiments, if the type of the second PDU set is the first type, the second transmission policy may be related to one or more of the following: the transmission resource of the data packet, or the planned delay range of the data packet. For example, if the type of the second PDU set is the first type, the second transmission policy may be related to one or more of the following: the TB used for transmitting the data packet, the BLER of the transmission resource, and the planned delay range of the data packet. The following describes specific content of the second transmission policy in a case that the type of the second PDU set is the first type.

In some embodiments, the second transmission policy may be related to the transmission resource of the data packet. For example, the second transmission policy may include: transmitting a plurality of data packets belonging to a same PDU set by using a same transmission resource. The plurality of data packets may be all data packets in a PDU set, or may be a part of data packets in a PDU set. If there are a relatively large quantity of data packets in a PDU set and one transmission resource is insufficient to transmit all the data packets in the PDU set, the data packets in the PDU set may be transmitted by using a plurality of transmission resources.

Taking a case in which the transmission resource includes a TB as an example, the second transmission policy may include: transmitting a plurality of data packets belonging to a same PDU set by using a same TB. That is, the sending device may transmit a plurality of data packets in the second PDU set by using a same TB.

Taking a case in which the transmission resource includes a BLER of the transmission resource as an example. The second transmission policy may include: transmitting a plurality of data packets belonging to a same PDU set by using transmission resources that are the same in BLER. That is, the sending device may transmit a plurality of data packets in the second PDU set by using transmission resources that are the same in BLER.

It can be learned from the foregoing description that the receiving device can correctly decode a PDU set of the first type only after the PDU set is completely transmitted to the receiving device. In other words, if only a part of data packets in the PDU set are transmitted to the receiving device, the part of data packets are useless for the receiving device. Based on this, in this embodiment of the present application, data packets in a same PDU set may be transmitted by using a same transmission resource, which ensures that the data packets on the transmission resource can arrive at the receiving device together.

In some embodiments, the second transmission policy may be related to the planned delay range of the data packet. For example, the second transmission policy may include: if it is anticipated that the sending device is incapable of completing transmission of remaining data packets in the second PDU set within the planned delay range, abandoning transmission of the remaining one or more data packets. If the sending device has transmitted a part of data packets in the second PDU set, but transmission of a remaining data packet cannot be completed within a transmission delay range, the sending device may abandon transmission of the remaining one or more data packets. In some embodiments, the sending device may abandon transmission of all remaining data packets. Certainly, the sending device may alternatively abandon transmission of a part of remaining data packets.

Because the sending device cannot complete transmission of all data packets in the second PDU set within the transmission delay range, the sending device may abandon transmission of one or more remaining data packets to avoid waste of transmission resources.

In some embodiments, the second transmission policy may include: if a part of data packets in the second PDU set are successfully transmitted and another part of the data packets are unsuccessfully transmitted, transmitting the unsuccessfully transmitted data packet by using a transmission resource having a first BLER, where the first BLER is less than or equal to a BLER of a transmission resource used for a previous transmission of a data packet.

The unsuccessfully transmitted data packet and the data packet of the previous transmission are not specifically limited in embodiments of the present application. The unsuccessfully transmitted data packet may be a data packet that has not been transmitted yet, or a data packet that has been transmitted but has failed in transmission. The data packet of the previous transmission may be a successfully transmitted data packet or a data packet that fails in transmission. Examples are given below for description.

For example, the second transmission policy may include: if a part of data packets in the second PDU set are successfully transmitted and another part of data packets fail in transmission, transmitting the another part of data packets by using a transmission resource having a first BLER. The first BLER is less than or equal to a BLER of a transmission resource used when the another part of data packets fail in transmission. If the another part of data packets fail in transmission, the sending device may transmit the another part of data packets by using a transmission resource having a lower BLER. By transmitting a data packet using a transmission resource with a lower BLER, a probability of successful transmission of the data packet can be improved. That a data packet fails in transmission may mean that the data packet fails in transmission for a first time, or that the data packet fails in transmission for an N-th time, where N is a positive integer greater than or equal to 1.

For another example, the second transmission policy may include: if a part of data packets in the second PDU set are successfully transmitted and another part of the data packets are not transmitted yet, transmitting the another part, not transmitted yet, of the data packets, by using a transmission resource having a first BLER. The first BLER is less than or equal to a BLER of a transmission resource used when a data packet is successfully transmitted. By directly transmitting a data packet that is not transmitted yet using a transmission resource with a lower BLER, a probability of successful transmission of a part of the data packets can be improved.

It can be learned from the foregoing description that initial transmission and/or retransmission of a data packet, that is not successfully transmitted, in the second PDU set may be performed by using a transmission resource having a lower BLER, so as to improve a probability of successful transmission of the data packet.

If the sending device is a terminal device, the terminal device may further send a request message to the network device, where the request message is used to request a transmission resource having the first BLER (that is, a transmission resource having a lower BLER), for transmitting or retransmitting a part of data packets in the second PDU set.

The foregoing describes the content related to the second transmission policy in a case that the type of the second PDU set is the first type. The following describes content of the second transmission policy in a case that the second PDU set is of the second type.

In some embodiments, if the type of the second PDU set is the second type, the second transmission policy is related to one or more of the following: the planned delay range of the data packet, or a condition for successful transmission of the second PDU set.

Successful transmission of the second PDU set may mean that the receiving device determines that the second PDU set can be used, or mean that the receiving device can obtain a corresponding image through decoding. The condition for successful transmission of the second PDU set may be the first condition described above. For example, the condition for successful transmission of the second PDU set may include one or more of the foregoing conditions 1B to 14B.

In some embodiments, the second transmission policy may be related to the planned delay range of the data packet. If it is anticipated that the sending device is incapable of completing transmission of remaining data packets in the second PDU set within the planned delay range, the sending device may continue to transmit the remaining data packets, or the sending device may try to transmit the remaining data packets. If the type of the second PDU set is the second type, the receiving device can correctly obtain a corresponding image through decoding without receiving all data packets in the second PDU set. Therefore, the sending device may transmit as many data packets as possible, provided that it is ensured that the receiving device can obtain the corresponding image through decoding.

In some embodiments, the second transmission policy may be related to the condition for successful transmission of the second PDU set. For example, the sending device may determine, based on the condition for successful transmission of the second PDU set, whether to abandon transmission of the remaining data packets in the second PDU set. For example, if the already transmitted data packet in the second PDU set meets the condition for successful transmission of the second PDU set, the sending device may abandon transmission of the remaining data packet. For another example, if the already transmitted data packet in the second PDU set does not meet the condition for successful transmission of the second PDU set, the sending device may continue to transmit the remaining data packets, so that the successfully transmitted data packet meets the condition for successful transmission of the second PDU set. Certainly, in some embodiments, if the already transmitted data packet in the second PDU set meets the condition for successful transmission of the second PDU set, the sending device may alternatively continue to transmit the remaining data packets.

In some embodiments, the second transmission policy may be related to both the planned delay range of the data packet and the condition for successful transmission of the second PDU set. For example, the second transmission policy may include: if it is anticipated that the sending device is incapable of completing transmission of the remaining data packets in the second PDU set within a transmission delay range, determining, based on the condition for successful transmission of the second PDU set, whether to abandon transmission of the remaining one or more data packets.

The following describes, with examples and with reference to FIG. 5, different conditions for successful transmission of the second PDU set. FIG. 5 shows 8 data packets in the second PDU set, of which 4 data packets have been already successfully transmitted and 4 data packets have not been successfully transmitted yet.

Case 1: If the condition for successful transmission of the second PDU set includes: a quantity of data packets, that are successfully transmitted to a receiving device, in the second PDU set is greater than or equal to K1, a sending device may determine, based on K1, whether to abandon transmission of remaining one or more data packets. If a value of K1 is 5, the sending device tries to transmit one or more of the remaining 4 data packets. For example, to ensure transmission of data packets in sequence, the sending device tries to transmit a data packet with a serial number 5.

Case 2: If the condition for successful transmission of the second PDU set includes: a quantity of unsuccessfully transmitted data packets in the second PDU set is less than or equal to K2, a sending device may determine, based on K2, whether to abandon transmission of remaining one or more data packets. If a value of K2 is 3, the sending device tries to transmit one or more of the remaining 4 data packets. For example, to ensure transmission of data packets in sequence, the sending device tries to transmit a data packet with a serial number 5.

Case 3: If the condition for successful transmission of the second PDU set includes: a quantity of bits of successfully transmitted data packets in the second PDU set is greater than or equal to K3, a sending device may determine, based on K3, whether to abandon transmission of remaining one or more data packets. If a value of K3 is 7000 bits, the sending device may calculate, based on a total quantity of bits of data packets with serial numbers 1, 2, 3, and 4, a quantity of bits required to be transmitted for meeting the condition for successful transmission of the second PDU set, and accordingly determine whether to transmit one or more of data packets with serial numbers 5, 6, 7, and 8.

Case 4: If the condition for successful transmission of the second PDU set includes: a quantity of bits of unsuccessfully transmitted data packets in the second PDU set is less than or equal to K4, a sending device may determine, based on K4, whether to abandon transmission of remaining one or more data packets. If a value of K3 is 2000 bits, the sending device may calculate, based on a total quantity of bits of data packets with serial numbers 5, 6, 7, and 8, a quantity of bits required to be transmitted for meeting the condition for successful transmission of the second PDU set, and accordingly determine whether to transmit one or more of data packets with serial numbers 5, 6, 7, and 8.

Case 5: If the condition for successful transmission of the second PDU set includes: a proportion of a quantity of successfully transmitted data packets in the second PDU set to a total quantity of data packets in the second PDU set is greater than or equal to K5%, a sending device may determine, based on K5%, whether to abandon transmission of remaining one or more data packets. If a value of K5% is 75%, the sending device is required to transmit 6 data packets to meet the condition for successful transmission of the second PDU set. In this case, the sending device tries to transmit at least 2 data packets of the remaining 4 data packets. For example, to ensure transmission of data packets in sequence, the sending device tries to transmit data packets with serial numbers 5 and 6.

Case 6: If the condition for successful transmission of the second PDU set includes: a proportion of a quantity of unsuccessfully transmitted data packets in the second PDU set to a total quantity of data packets in the second PDU set is less than or equal to K6%, a sending device may determine, based on K6%, whether to abandon transmission of remaining one or more data packets. If a value of K6% is 25%, the sending device is required to transmit 6 data packets to meet the condition for successful transmission of the second PDU set. In this case, the sending device tries to transmit at least 2 data packets of the remaining 4 data packets. For example, to ensure transmission of data packets in sequence, the sending device tries to transmit data packets with serial numbers 5 and 6.

Case 7: If the condition for successful transmission of the second PDU set includes: a proportion of a quantity of bits of a successfully transmitted data packet in the second PDU set to a total quantity of bits of data packets in the second PDU set is greater than or equal to K7%, a sending device may determine, based on K7%, whether to abandon transmission of remaining one or more data packets. The sending device may calculate, based on a proportion of a total quantity of bits of data packets with serial numbers 1 to 4 to a total quantity of bits of data packets with serial numbers 1 to 8, a quantity of bits required to be transmitted for meeting the condition for successful transmission of the second PDU set, and accordingly determine whether to transmit one or more of data packets with serial numbers 5 to 8.

Case 8: If the condition for successful transmission of the second PDU set includes: a proportion of a quantity of bits of an unsuccessfully transmitted data packet in the second PDU set to a total quantity of bits of data packets in the second PDU set is less than or equal to K8%, a sending device may determine, based on K8%, whether to abandon transmission of remaining one or more data packets. The sending device may calculate, based on a proportion of a total quantity of bits of data packets with serial numbers 5 to 8 to a total quantity of bits of data packets with serial numbers 1 to 8, a quantity of bits required to be transmitted for meeting the condition for successful transmission of the second PDU set, and accordingly determine whether to transmit one or more of data packets with serial numbers 5 to 8.

Case 9: If the condition for successful transmission of the second PDU set includes: locations of successfully transmitted data packets in the second PDU set are consecutive, a sending device may abandon transmission of one or more of the data packets with serial numbers 5 to 8 or may continue to transmit one or more of the data packets with serial numbers 5 to 8 because the successfully transmitted data packets are consecutive data packets with serial numbers 1 to 4.

Case 10: If the condition for successful transmission of the second PDU set includes: locations of unsuccessfully transmitted data packets in the second PDU set are consecutive, a sending device may abandon transmission of one or more of the data packets with serial numbers 5 to 8 or may continue to transmit one or more of data packets with serial numbers 5 to 8 because the unsuccessfully transmitted data packets are consecutive data packets with serial numbers 5 to 8.

Case 11: If the condition for successful transmission of the second PDU set includes: a quantity of successfully received data packets, whose locations are consecutive, in the second PDU set is greater than or equal to M1, a sending device may determine, based on M1, whether to abandon transmission of remaining one or more data packets. If a value of M1 is 6, the sending device tries to transmit at least 2 data packets of the remaining 4 data packets. For example, to ensure transmission of data packets in sequence, the sending device tries to transmit data packets with serial numbers 5 and 6.

Case 12: If the condition for successful transmission of the second PDU set includes: a quantity of unsuccessfully received data packets, whose locations are consecutive, in the second PDU set is less than or equal to M2, a sending device may determine, based on M2, whether to abandon transmission of remaining one or more data packets. If a value of M2 is 3, the sending device tries to transmit one or more of the remaining 4 data packets. For example, to ensure transmission of data packets in sequence, the sending device tries to transmit a data packet with a serial number 5.

Case 13: If the condition for successful transmission of the second PDU set includes that the quantity of bits of successfully transmitted data packets, whose locations are consecutive, in the second PDU set is greater than or equal to M3, the sending device may determine, based on M3, whether to abandon transmission of the remaining one or more data packets. If a value of M3 is 7000 bits, the sending device may calculate, based on a total quantity of bits of data packets with serial numbers 1, 2, 3, and 4, a quantity of bits required to be transmitted for meeting the condition for successful transmission of the second PDU set, and accordingly determine whether to transmit one or more of data packets with serial numbers 5, 6, 7, and 8.

Case 14: If the condition for successful transmission of the second PDU set includes: a quantity of bits of unsuccessfully transmitted data packets, whose locations are consecutive, in the second PDU set is less than or equal to M4, a sending device may determine, based on M4, whether to abandon transmission of remaining one or more data packets. If a value of M4 is 2000 bits, the sending device may calculate, based on a total quantity of bits of data packets with serial numbers 5, 6, 7, and 8, a quantity of bits required to be transmitted for meeting the condition for successful transmission of the second PDU set, and accordingly determine whether to transmit one or more of data packets with serial numbers 5, 6, 7, and 8.

It should be noted that the foregoing case 1 to 14 may be used alone or in combination with each other. For example, one or more of Cases 1 to 8 may be used in combination with one or more of Cases 9 to 14.

The solution of how to determine a transmission policy by the receiving device and/or the sending device based on a type of a PDU set is described in detail above. The following describes how to indicate a type of a PDU set to the receiving device and the sending device. It may be understood that the methods described above and the methods described below may be used in combination. For example, in a case that the receiving device or the sending device is a terminal device, the receiving device or the sending device may apply the method shown in FIG. 6 below. For another example, in a case that the receiving device or the sending device is a network device, the receiving device or the sending device may apply the method shown in FIG. 7 below.

FIG. 6 shows another wireless communication method according to an embodiment of the present application, which provides a clear solution for how to indicate a type of a PDU set to a terminal device. In addition, a type of a PDU set is indicated to the terminal device, so that the terminal device can perform corresponding data processing based on the type of the PDU set, which is conducive to improving a probability of successful transmission of data. In this way, more PDU sets can be decoded at an application layer of a receiver for use, reducing unnecessary data transmission.

Referring to FIG. 6, in step S610, a terminal device receives first indication information, where the first indication information is used to indicate a type of a PDU set.

The PDU set may be of a plurality of types, for example, the first PDU set may be of a first type and a second type. The first type may be the class A described above, and the second type may be the class B described above. Certainly, the first PDU set may be alternatively of more types, for example, the PDU set may be of three types or the like.

The first indication information may be carried in a plurality of manners. For example, the first indication information may be carried in control signaling. For another example, the first indication information may be carried in a user plane message.

In some embodiments, the first indication information may be transmitted by an application server to the terminal device. If the type of the PDU set is determined by the application server, the application server may send the first indication information to the terminal device.

That the application server sends the first indication information to the terminal device may mean that the application server sends the first indication information to the terminal device through one or more of a session management function (session management function, SMF), an application function (application function, AF), a user plane function (user plane function, UPF), and a base station.

In some embodiments, the first indication information may be sent by an application layer of the terminal device to an access layer of the terminal device. If the type of the PDU set is determined by the application layer of the terminal device, the application layer of the terminal device may send the first indication information to the access layer of the terminal device.

In some embodiments, the first indication information may alternatively be sent by a network device to the terminal device. For example, the application server may indicate the type of the PDU set to the network device, and the network device sends the first indication information to the terminal device after receiving an indication from the application server. That the network device sends the first indication information to the terminal device may mean that the network device sends the first indication information to the access layer of the terminal device.

The application server is not specifically limited in embodiments of the present application. The application server may be a server corresponding to a service type. Taking an XR service as an example, the application server may be an XR server.

In some embodiments, the PDU set may include an uplink PDU set and/or a downlink PDU set. The first indication information may be used to indicate a type of the uplink PDU set and/or a type of the downlink PDU set. In some embodiments, the type of the uplink PDU set and the type of the downlink PDU set may be indicated by same indication information, or the type of the uplink PDU set and the type of the downlink PDU set may be indicated by different indication information.

In some embodiments, the type of the PDU set may be determined by an application layer of the terminal device and/or the application server. For example, the type of the uplink PDU set is determined by the application layer of the terminal device, and the type of the downlink PDU set is determined by the application server.

In some embodiments, the terminal device may negotiate the type of PDU set with the application server. For example, the terminal device may indicate the type of the uplink PDU set to the application server, or the application server may indicate the type of the downlink PDU set to the terminal device.

In some embodiments, the first indication information may be used to indicate a type of each PDU set. In some other embodiments, the first indication information may be used to indicate a type of a PDU set corresponding to a data flow. In some other embodiments, the first indication information may be used to indicate a type of a PDU set corresponding to a data radio bearer (data radio bearer, DRB). The type of the PDU set corresponding to the DRB may be determined based on a type of a PDU set corresponding to a data flow and a correspondence between a data flow and a DRB. In some other embodiments, the first indication information may be used to indicate a type of a PDU set corresponding to a first protocol entity. The type of the PDU set corresponding to the first protocol entity may be determined based on a type of a PDU set corresponding to a data flow and a correspondence between a data flow and a first protocol entity. The first protocol entity may be, for example, a PDCP entity. The data flow may be, for example, a quality of service (quality of service, QoS) flow.

In some embodiments, the type of the PDU set corresponding to the data flow may be determined by the application layer of the terminal device and/or the application server. For example, a type of a PDU set corresponding to an uplink data flow may be determined by the application layer of the terminal device, and a type of a PDU set corresponding to a downlink data flow may be determined by the application server.

In some embodiments, the type of the PDU set corresponding to the DRB and/or the type of the PDU set corresponding to the first protocol entity may be determined by one or more of the following: an application layer of a terminal device, an access layer of a terminal device, and a network device. For example, a type of a PDU set corresponding to an uplink DRB and/or a type of a PDU set corresponding to an uplink first protocol entity may be determined by an application layer of a terminal device and/or an access layer of a terminal device, and a type of a PDU set corresponding to a downlink DRB and/or a type of the PDU set corresponding to a downlink first protocol entity may be determined by a network device.

If the type of the PDU set corresponding to the data flow is determined by the application layer of the terminal device, the terminal device may further send second indication information to the network device, and the second indication information is used to indicate the type of the PDU set. For example, the second indication information may be used to indicate one or more of the following: a type of a PDU set corresponding to a data flow, a type of a PDU set corresponding to a DRB, and a type of a PDU set corresponding to a first protocol entity.

In embodiments of the present application, a manner in which the second indication information is carried is not specifically limited. For example, the second indication information may be carried in RRC signaling. For another example, the second indication information may be carried in a MAC control element (control element, CE). For another example, the second indication information may be carried in a PDCP control PDU.

In some embodiments, terminal device, when sending the second indication information to the network device, may further indicate, to the network device, the first condition, for example, conditions 1A to 14A and/or conditions 1B to 14B described above. In some embodiments, the terminal device may indicate, to the network device, conditions 1A to 14A and/or conditions 1B to 14B corresponding to downlink data, so that the network device determines a scheduling policy for transmitting the downlink data. In some embodiments, the terminal device may indicate, to the network device, conditions 1A to 14A and/or conditions 1B to 14B corresponding to uplink data, so that the network device determines an amount of data required to be transmitted by the terminal device, thereby properly performing scheduling for the terminal device.

In some embodiments, the terminal device may determine, based on a type of a PDU set corresponding to a data flow and a correspondence between a data flow and a DRB, a type of a PDU set corresponding to a DRB. The correspondence between a data flow and a DRB may be indicated by the network device to the terminal device.

In some embodiments, the terminal device may determine, based on a type of a PDU set corresponding to a data flow and a correspondence between a data flow and a first protocol entity, a type of a PDU set corresponding to a first protocol entity. The correspondence between a data flow and a first protocol entity may be indicated by the network device to the terminal device.

In some embodiments, the type of the PDU set corresponding to the DRB may be determined by an application layer of the terminal device, or may be determined by an access layer of the terminal device.

In some embodiments, the type of PDU set corresponding to the first protocol entity may be determined by an application layer of the terminal device, or may be determined by an access layer of the terminal device.

For example, the network device may indicate the correspondence between a data flow and a DRB to the access layer of the terminal device, the access layer of the terminal device may indicate the correspondence between a data flow and a DRB to the application layer of the terminal device, and the application layer of the terminal device may determine, based on the type of the PDU set corresponding to the data flow and the correspondence between a data flow and a DRB, the type of the PDU set corresponding to the DRB. In some embodiments, the application layer of the terminal device may indicate, to the access layer of the terminal device, the type of PDU set corresponding to the DRB. In some embodiments, the access layer of the terminal device may indicate, to the network device, the type of PDU set corresponding to the DRB.

For another example, the network device may indicate the correspondence between a data flow and a DRB to the access layer of the terminal device, and the access layer of the terminal device may request, from the application layer of the terminal device, the type of the PDU set corresponding to the data flow. The access layer of the terminal device may determine, based on the type of the PDU set corresponding to the data flow and the correspondence between a data flow and a DRB, the type of the PDU set corresponding to the DRB. In some embodiments, the access layer of the terminal device may indicate, to the network device, the type of PDU set corresponding to the DRB.

For another example, the network device may indicate the correspondence between a data flow and a first protocol entity to the access layer of the terminal device, the access layer of the terminal device may indicate the correspondence between a data flow and a first protocol entity to the application layer of the terminal device, and the application layer of the terminal device may determine, based on the type of the PDU set corresponding to the data flow and the correspondence between a data flow and a first protocol entity, the type of the PDU set corresponding to the first protocol entity. In some embodiments, the application layer of the terminal device may indicate, to the access layer of the terminal device, the type of PDU set corresponding to the first protocol entity. In some embodiments, the access layer of the terminal device may indicate, to the network device, the type of PDU set corresponding to the first protocol entity.

For another example, the network device may indicate the correspondence between a data flow and a first protocol entity to the access layer of the terminal device, and the access layer of the terminal device may request, from the application layer of the terminal device, the type of the PDU set corresponding to the data flow. The access layer of the terminal device may determine, based on the type of the PDU set corresponding to the data flow and the correspondence between a data flow and a first protocol entity, the type of the PDU set corresponding to the first protocol entity. In some embodiments, the access layer of the terminal device may indicate, to the network device, the type of PDU set corresponding to the first protocol entity.

In some embodiments, the network device may send first indication information to the terminal device, where the first indication information may be used to indicate one or more of the following: a type of a PDU set corresponding to a data flow, a type of a PDU set corresponding to a DRB, and a type of a PDU set corresponding to a first protocol entity.

In some embodiments, if the type of the PDU set corresponding to the data flow is determined by the application server, the application server may indicate, to the network device, the type of the PDU set corresponding to the data flow. In some embodiments, the network device may directly indicate, to the terminal device, the type of PDU set corresponding to the data flow. In some other embodiments, the network device may determine, based on a type of a PDU set corresponding to a data flow and a correspondence between a data flow and a DRB, a type of a PDU set corresponding to a DRB. In addition, the network device may further send first indication information to the terminal device, where the first indication information is used to indicate the type of the PDU set corresponding to the DRB. In some other embodiments, the network device may determine, based on a type of a PDU set corresponding to a data flow and a correspondence between a data flow and a first protocol entity, a type of a PDU set corresponding to a first protocol entity. In addition, the network device may further send first indication information to the terminal device, where the first indication information is used to indicate a type of a PDU set corresponding to a first protocol entity.

If the network device determines a type of a PDU set corresponding to an uplink DRB and a type of a PDU set corresponding to a downlink DRB, the network device sends first indication information to the terminal device, where the first indication information may be used to indicate the type of the PDU set corresponding to the uplink DRB, or the first indication information may be used to indicate the type of the PDU set corresponding to the downlink DRB, or the first indication information may be used to indicate both the type of the PDU set corresponding to the uplink DRB and the type of the PDU set corresponding to the downlink DRB.

If the network device determines a type of a PDU set corresponding to an uplink first protocol entity and a type of a PDU set corresponding to a downlink first protocol entity, the network device sends the first indication information to the terminal device, where the first indication information may be used to indicate the type of the PDU set corresponding to the uplink first protocol entity, or the first indication information may be used to indicate the type of the PDU set corresponding to the downlink first protocol entity, or the first indication information may be used to indicate both the type of the PDU set corresponding to the uplink first protocol entity and the type of the PDU set corresponding to the downlink first protocol entity.

FIG. 7 is another wireless communication method according to an embodiment of the present application, which provides a clear solution for how to indicate a type of a PDU set to a network device. In addition, a type of a PDU set is indicated to the network device, so that the network device can perform corresponding data processing based on the type of the PDU set, which helps improve a probability of successful data transmission. In this way, more PDU sets can be decoded at an application layer of a receiver for use, reducing unnecessary data transmission.

Referring to FIG. 7, in step S710, a network device receives third indication information, where the third indication information is used to indicate a type of a PDU set.

The PDU set may be of a plurality of types, for example, the first PDU set may be of a first type and a second type. The first type may be the class A described above, and the second type may be the class B described above. Certainly, the first PDU set may be alternatively of more types, for example, the PDU set may be of three types or the like.

The first indication information may be carried in a plurality of manners. For example, the first indication information may be carried in control signaling. For another example, the first indication information may be carried in a user plane message.

In some embodiments, the third indication information may be sent by a terminal device to the network device. For example, the third indication information may be sent by an access layer of the terminal device to the network device. If the type of the PDU set is determined by an application layer of the terminal device, the application layer of the terminal device may send the third indication information to the network device through the access layer of the terminal device.

In some embodiments, the third indication information may be sent to the network device through an application server. If the type of the PDU set is determined by the application server, the application server may send the third indication information to the network device.

That the application server sends the third indication information to the network device may mean that the application server sends the third indication information to the network device through one or more of an SMF, an AF, and a UPF.

The application server is not specifically limited in embodiments of the present application. The application server may be a server corresponding to a service type. Taking an XR service as an example, the application server may be an XR server.

In some embodiments, the PDU set may include an uplink PDU set and/or a downlink PDU set. The third indication information may be used to indicate a type of the uplink PDU set and/or a type of the downlink PDU set. In some embodiments, the type of the uplink PDU set and the type of the downlink PDU set may be indicated by same indication information, or the type of the uplink PDU set and the type of the downlink PDU set may be indicated by different indication information.

In some embodiments, the type of the PDU set may be determined by an application layer of the terminal device and/or the application server. For example, the type of the uplink PDU set is determined by the application layer of the terminal device, and the type of the downlink PDU set is determined by the application server.

In some embodiments, the terminal device may negotiate the type of PDU set with the application server. For example, the terminal device may indicate the type of the uplink PDU set to the application server, or the application server may indicate the type of the downlink PDU set to the terminal device.

In some embodiments, the third indication information may be used to indicate a type of each PDU set. In some other embodiments, the third indication information may be used to indicate a type of a PDU set corresponding to a data flow. In some other embodiments, the third indication information may be used to indicate a type of a PDU set corresponding to a DRB. The type of the PDU set corresponding to the DRB may be determined based on a type of a PDU set corresponding to a data flow and a correspondence between a data flow and a DRB. In some other embodiments, the third indication information may be used to indicate a type of a PDU set corresponding to a first protocol entity. The type of the PDU set corresponding to the first protocol entity may be determined based on a type of a PDU set corresponding to a data flow and a correspondence between a data flow and a first protocol entity. The first protocol entity may be, for example, a PDCP entity.

In some embodiments, a type of a PDU set corresponding to a data flow may be determined by the application layer of the terminal device and/or the application server. For example, a type of a PDU set corresponding to an uplink data flow may be determined by the application layer of the terminal device, and a type of a PDU set corresponding to a downlink data flow may be determined by the application server.

In some embodiments, a type of a PDU set corresponding to a DRB and/or a type of a PDU set corresponding to a first protocol entity may be determined by one or more of the following: an application layer of a terminal device, an access layer of the terminal device, and a network device. For example, a type of a PDU set corresponding to an uplink DRB and/or a type of a PDU set corresponding to an uplink first protocol entity may be determined by an application layer of a terminal device and/or an access layer of the terminal device, and a type of a PDU set corresponding to a downlink DRB and/or a type of a PDU set corresponding to a downlink first protocol entity may be determined by a network device.

If a type of a PDU set corresponding to a data flow is determined by the application layer of the terminal device, the terminal device may send third indication information to the network device, where the third indication information is used to indicate the type of the PDU set. The third indication information may be used to indicate one or more of the following: the type of the PDU set corresponding to the data flow, a type of a PDU set corresponding to a DRB, and a type of a PDU set corresponding to a first protocol entity.

In embodiments of the present application, a manner in which the third indication information is carried is not specifically limited. For example, the third indication information may be carried in RRC signaling. For another example, the third indication information may be carried in a MAC CE. For another example, the third indication information may be carried in a PDCP control PDU.

In some embodiments, the terminal device may determine, based on a type of a PDU set corresponding to a data flow and a correspondence between a data flow and a DRB, a type of a PDU set corresponding to a DRB. The correspondence between a data flow and a DRB may be indicated by the network device to the terminal device.

In some embodiments, the terminal device may determine, based on a type of a PDU set corresponding to a data flow and a correspondence between a data flow and a first protocol entity, a type of a PDU set corresponding to a first protocol entity. The correspondence between a data flow and a first protocol entity may be indicated by the network device to the terminal device.

In some embodiments, the type of the PDU set corresponding to the DRB may be determined by an application layer of a terminal device, or may be determined by an access layer of a terminal device.

In some embodiments, the type of PDU set corresponding to the first protocol entity may be determined by an application layer of a terminal device, or may be determined by an access layer of a terminal device.

For example, the network device may indicate the correspondence between a data flow and a DRB to the access layer of the terminal device, the access layer of the terminal device may indicate the correspondence between a data flow and a DRB to the application layer of the terminal device, and the application layer of the terminal device may determine, based on the type of the PDU set corresponding to the data flow and the correspondence between a data flow and a DRB, the type of the PDU set corresponding to the DRB. In some embodiments, the application layer of the terminal device may indicate, to the access layer of the terminal device, the type of PDU set corresponding to the DRB. In some embodiments, the access layer of the terminal device may indicate, to the network device, the type of PDU set corresponding to the DRB.

For another example, the network device may indicate the correspondence between a data flow and a DRB to the access layer of the terminal device, and the access layer of the terminal device may request, from the application layer of the terminal device, the type of the PDU set corresponding to the data flow. The access layer of the terminal device may determine, based on the type of the PDU set corresponding to the data flow and the correspondence between a data flow and a DRB, the type of the PDU set corresponding to the DRB. In some embodiments, the access layer of the terminal device may indicate, to the network device, the type of the PDU set corresponding to the DRB.

For example, the network device may indicate the correspondence between a data flow and a first protocol entity to the access layer of the terminal device, the access layer of the terminal device may indicate the correspondence between a data flow and a first protocol entity to the application layer of the terminal device, and the application layer of the terminal device may determine, based on the type of the PDU set corresponding to the data flow and the correspondence between a data flow and a first protocol entity, the type of the PDU set corresponding to the first protocol entity. In some embodiments, the application layer of the terminal device may indicate, to the access layer of the terminal device, the type of the PDU set corresponding to the first protocol entity. In some embodiments, the access layer of the terminal device may indicate, to the network device, the type of PDU set corresponding to the first protocol entity.

For another example, the network device may indicate the correspondence between a data flow and a first protocol entity to the access layer of the terminal device, and the access layer of the terminal device may request, from the application layer of the terminal device, the type of the PDU set corresponding to the data flow. The access layer of the terminal device may determine, based on the type of the PDU set corresponding to the data flow and the correspondence between a data flow and a first protocol entity, the type of the PDU set corresponding to the first protocol entity. In some embodiments, the access layer of the terminal device may indicate, to the network device, the type of PDU set corresponding to the first protocol entity.

If the terminal device determines a type of a PDU set corresponding to an uplink DRB and a type of a PDU set corresponding to a downlink DRB, the terminal device sends third indication information to the network device, where the third indication information may be used to indicate the type of the PDU set corresponding to the uplink DRB, or the third indication information may be used to indicate the type of the PDU set corresponding to the downlink DRB, or the third indication information may be used to indicate both the type of the PDU set corresponding to the uplink DRB and the type of the PDU set corresponding to the downlink DRB.

If the terminal device determines a type of a PDU set corresponding to an uplink first protocol entity and a type of a PDU set corresponding to a downlink first protocol entity, the terminal device sends third indication information to the network device, where the third indication information may be used to indicate the type of the PDU set corresponding to the uplink first protocol entity, or the third indication information may be used to indicate the type of the PDU set corresponding to the downlink first protocol entity, or the third indication information may be used to indicate both the type of the PDU set corresponding to the uplink first protocol entity and the type of the PDU set corresponding to the downlink first protocol entity.

In some embodiments, if a type of a PDU set corresponding to a data flow is determined by the application server, the application server may indicate, to the network device, the type of the PDU set corresponding to the data flow. For example, the application server may send third indication information to the network device, where the third indication information is used to indicate the type of the PDU set corresponding to the data flow.

The methods described below are applicable to the solutions shown in FIG. 6 and FIG. 7.

There are a plurality of manners in which it is determined a type of a PDU set corresponding to a DRB based on a type of a PDU set corresponding to a data flow. Three manners are described below.

Manner 1: If all PDU sets corresponding to a first DRB are of a first type, or if PDU sets corresponding to all data flows in a first DRB are of a first type, the first indication information is used to indicate that a type of the PDU set corresponding to the first DRB is the first type.

Manner 2: If all PDU sets corresponding to a first DRB are of a second type, or if PDU sets corresponding to all data flows in a first DRB are of a second type, the first indication information is used to indicate that a type of the PDU set corresponding to the first DRB is the second type.

Manner 3: If a part of PDU sets corresponding to a first DRB are of a first type and another part of the PDU sets are of a second type, or if PDU sets corresponding to a part of data flows in a first DRB are of a first type and PDU sets corresponding to another part of the data flows are of a second type, the first indication information is used to indicate that types of the PDU sets corresponding to the first DRB include the first type and the second type, or the third indication information is used to indicate that types of the PDU sets corresponding to the first DRB include the first type and the second type.

In some embodiments, if the types of the PDU sets corresponding to the first DRB are determined by the network device, and the types of the PDU sets corresponding to the first DRB include the first type and the second type, the network device may not send the first indication information to the terminal device. If the terminal device does not receive the first indication information sent by the network device, the terminal device may determine that the types of the PDU sets corresponding to a current DRB include the first type and the second type.

In some embodiments, if the types of the PDU sets corresponding to the first DRB are determined by the terminal device, and the types of the PDU sets corresponding to the first DRB include the first type and the second type, the terminal device may not send the third indication information to the network device. If the network device does not receive the third indication information sent by the terminal device, the network device may determine that types of PDU sets corresponding to a current DRB include the first type and the second type.

There are a plurality of manners in which it is determined a type of a PDU set corresponding to a first protocol entity based on a type of a PDU set corresponding to a data flow. Three manners are described below.

Manner 1: If all PDU sets corresponding to a first protocol entity are of a first type, or if PDU sets corresponding to all data flows in a first protocol entity are of a first type, the first indication information is used to indicate that a type of the PDU set corresponding to the first protocol entity is the first type.

Manner 2: If all PDU sets corresponding to a first protocol entity are of a second type, or if PDU sets corresponding to all data flows in a first protocol entity are of a second type, the first indication information is used to indicate that a type of the PDU set corresponding to the first protocol entity is the second type.

Manner 3: If a part of PDU sets corresponding to a first protocol entity are of a first type and another part of the PDU sets are of a second type, or if PDU sets corresponding to a part of data flows in a first protocol entity are of a first type and PDU sets corresponding to another part of the data flows are of a second type, the first indication information is used to indicate that types of the PDU sets corresponding to the first protocol entity include the first type and the second type, or the third indication information is used to indicate that types of the PDU sets corresponding to the first protocol entity include the first type and the second type.

In some embodiments, if the types of the PDU sets corresponding to the first protocol entity are determined by the network device, and the types of the PDU sets corresponding to the first protocol entity include the first type and the second type, the network device may not send the first indication information to the terminal device. If the terminal device does not receive the first indication information sent by the network device, the terminal device may determine that types of PDU sets corresponding to a current first protocol entity include the first type and the second type.

In some embodiments, if the types of the PDU sets corresponding to the first protocol entity are determined by the terminal device, and the types of the PDU sets corresponding to the first protocol entity include the first type and the second type, the terminal device may not send the third indication information to the network device. If the network device does not receive the third indication information sent by the terminal device, the network device may determine that types of PDU sets corresponding to a current first protocol entity include the first type and the second type.

The following describes in detail a solution for indicating a type of a PDU set provided in embodiments of the present application with reference to FIG. 8 to FIG. 10.

### Example 1

FIG. 8 shows a scheme in which a type of a PDU set is indicated by an application server. The application server may indicate, to a terminal device through control signaling, a type of a PDU set transmitted by a data flow and/or a DRB and/or a first protocol entity.

In step S810, an application server indicates, to an SMF, a type of a PDU set corresponding to a data flow. The type of the PDU set corresponding to the data flow may be class A or class B.

That the application server sends indication information to the SMF may mean that the application server sends the indication information to the SMF through an AF.

Because the application server provides the data flow rather than a DRB and/or a first protocol entity, the application server can indicate only the type of the PDU set corresponding to the data flow, and cannot indicate a type of a PDU set corresponding to the DRB and/or a type of a PDU set corresponding to the first protocol entity. This indication means that a plurality of PDU sets transmitted by one data flow are of a same type, that is, the class A or the class B.

In some embodiments, prior to step S810, step S802 may be further included: The application server may negotiate, with an access layer of a UE, the type of the PDU set corresponding to the data flow. For example, the access layer of the UE indicates, to the application server, a type of a PDU set corresponding to an uplink data flow. A type of a PDU set corresponding to a downlink data flow may be autonomously determined by the application server, and therefore the application server can obtain the type of the PDU set corresponding to the uplink data flow and the type of the PDU set corresponding to the downlink data flow.

In step S820, the SMF indicates, to a base station, the type of the PDU set corresponding to the data flow.

Similar to the manner in which the application server sends an indication to the SMF, the SMF can indicate only the type of the PDU set corresponding to the data flow to the base station, and cannot indicate the type of the PDU set corresponding to the DRB and/or the type of the PDU set corresponding to the first protocol entity to the base station.

In step S830, the base station, after receiving the indication from the SMF, may determine, based on a correspondence between a data flow and a DRB and based on types of PDU sets corresponding to a plurality of data flows in one DRB, a type of a PDU set corresponding to the DRB. Alternatively, the base station may determine, based on a correspondence between a data flow and a first protocol entity and based on types of PDU sets corresponding to a plurality of data flows in one first protocol entity, a type of a PDU set corresponding to the first protocol entity.

The following describes a scheme in which it is determined a type of a PDU set corresponding to a DRB. Specifically, the following three cases may be included.

Case 1: If PDU sets of all data flows in one DRB are of a class A, the base station may notify the UE that "a type of a PDU set corresponding to the DRB is class A".

Case 2: If PDU sets of all data flows in one DRB are of a class B, the base station may notify the UE that "a type of a PDU set corresponding to the DRB is class B".

Case 3: If PDU sets corresponding to a part of data flows in a plurality of data flows in one DRB are of class A and PDU sets corresponding to another part of the data flows are of class B, the base station may notify the UE that "types of PDU sets corresponding to the DRB include class A and class B". Alternatively, the base station may not notify the UE of a type of a PDU set corresponding to a current DRB. If the base station does not notify the UE of the type of the PDU set corresponding to the DRB, the UE may determine that the types of the PDU sets corresponding to the DRB include class A and class B.

The following describes a scheme in which it is determined a type of a PDU set corresponding to a first protocol entity. Specifically, the following three cases may be included:
Case 1: If PDU sets of all data flows in one first protocol entity are of class A, the base station may notify the UE that "a type of a PDU set corresponding to the first protocol entity is class A".
Case 2: If PDU sets of all data flows in one first protocol entity are of class B, the base station may notify the UE that "a type of a PDU set corresponding to the first protocol entity is class B".
Case 3: If PDU sets corresponding to a part of a plurality of data flows in one first protocol entity are of class A and PDU sets corresponding to another part of the plurality of data flows are of class B, the base station may notify the UE that "types of PDU sets corresponding to the first protocol entity include class A and class B". Alternatively, the base station may not notify the UE of types of PDU sets corresponding to a current first protocol entity. If the base station does not notify the UE of the types of the PDU sets corresponding to the current first protocol entity, the UE may determine that the types of the PDU sets corresponding to the current first protocol entity include class A and class B.

In step S840, the base station may indicate the type of the PDU set to the UE (or an access layer of the UE). For example, the base station may indicate, to the UE, the type of the PDU set corresponding to the data flow, or the base station may indicate, to the UE, the type of the PDU set corresponding to the DRB, or the base station may indicate, to the UE, the type of the PDU set corresponding to the first protocol entity.

In the procedure shown in FIG. 8, the type of the PDU set indicated in each step may be for only an uplink data flow, or for only a downlink data flow, or for both an uplink data flow and a downlink data flow.

After receiving the indication from the SMF, the base station may determine a type of a PDU set corresponding to an uplink DRB and a type of a PDU set corresponding to a downlink DRB. After determining the type of the PDU set corresponding to the uplink DRB and the type of the PDU set corresponding to the downlink DRB, the base station may indicate, to the UE, only the type of the PDU set corresponding to the uplink DRB, or may indicate, to the UE, only the type of the PDU set corresponding to the downlink DRB, or may indicate, to the UE, both the type of the PDU set corresponding to the uplink DRB and the type of the PDU set corresponding to the downlink DRB.

After receiving the indication from the SMF, the base station may determine a type of a PDU set corresponding to an uplink first protocol entity and a type of a PDU set corresponding to a downlink first protocol entity. After determining the type of the PDU set corresponding to the uplink first protocol entity and the type of the PDU set corresponding to the downlink first protocol entity, the base station may indicate, to the UE, only the type of the PDU set corresponding to the uplink first protocol entity, or may indicate, to the UE, only the type of the PDU set corresponding to the downlink first protocol entity, or may indicate, to the UE, both the type of the PDU set corresponding to the uplink first protocol entity and the type of the PDU set corresponding to the downlink first protocol entity.

In the solution shown in FIG. 8, the application server may indicate, to another device, the type of the PDU set corresponding to the uplink data flow and/or the type of the PDU set corresponding to the downlink data flow.

### Example 2

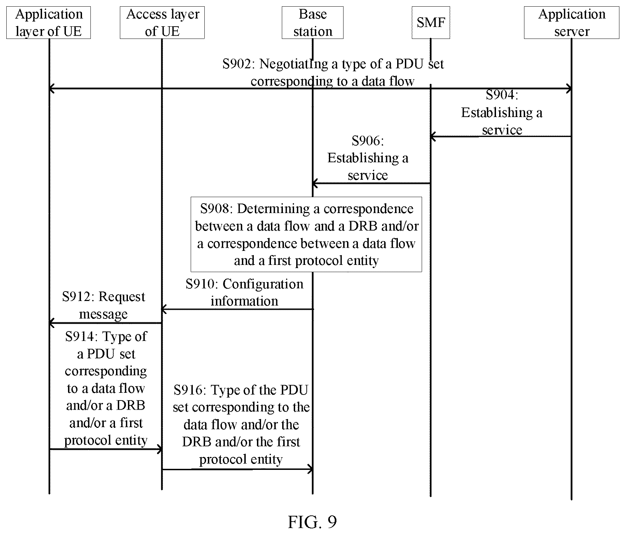

FIG. 9 shows a scheme in which a type of a PDU set is indicated by a UE side. A UE may indicate, to a network device through control signaling, a type of a PDU set transmitted by a data flow and/or a DRB and/or a first protocol entity.

In step S902, an application layer of a UE may negotiate, with an application server, a type of a PDU set corresponding to a data flow. For example, the application server may indicate, to the application layer of the UE, a type of a PDU set corresponding to a downlink data flow. A type of a PDU set corresponding to an uplink data flow may be autonomously determined by a terminal device, and therefore the terminal device can obtain the type of the PDU set corresponding to the uplink data flow and the type of the PDU set corresponding to the downlink data flow.

In step S904, a service is established between the application server and an SMF. The service may be, for example, an XR service.

In step S906, a service is established between the SMF and a base station. The service may be, for example, an XR service.

In step S908, the base station determines a correspondence between a data flow and a DRB and/or a correspondence between a data flow and a first protocol entity.

In step S910, the base station sends configuration information to an access layer of the UE, where the configuration information may be used to configure one or more of the following: the correspondence between a data flow and a DRB, a current data flow, a current DRB, the correspondence between a data flow and a first protocol entity, or a current first protocol entity.

In step S912, the access layer of the UE sends a request message to the application layer of the UE to request a type of a PDU set. The type of the PDU set may include one or more of the following: the type of the PDU set corresponding to the data flow, a type of a PDU set corresponding to a DRB, and a type of a PDU set corresponding to a first protocol entity. In some embodiments, the request message may further carry one or more of the current data flow, the current DRB, the correspondence between a data flow and a DRB, the correspondence between a data flow and a first protocol entity, and the current first protocol entity.

After receiving the request from the access layer of the UE, the application layer of the UE may determine, based on the current data flow, a type of a PDU set corresponding to the current data flow. If the request message carries the correspondence between a data flow and a DRB, the application layer of the UE can determine a type of a PDU set corresponding to the DRB. If the request message carries the correspondence between a data flow and a first protocol entity, the application layer of the UE can determine a type of a PDU set corresponding to the first protocol entity.

That the application layer of the UE determines the type of the PDU set corresponding to the DRB and/or the type of the PDU set corresponding to the first protocol entity may be the same as that in Example 1. For brevity, details are not described herein.

In step S914, the application layer of the UE indicates, to the access layer of the UE, one or more of the following: the type of the PDU set corresponding to the current data flow, the type of the PDU set corresponding to the DRB, and the type of the PDU set corresponding to the first protocol entity.

If the application layer of the UE indicates, to the access layer of the UE, a type of a PDU set corresponding to the current data flow, the access layer of the UE may determine, based on the type of the PDU set corresponding to the current data flow and the correspondence between a data flow and a DRB, a type of a PDU set corresponding to the current DRB, or the access layer of the UE may determine, based on the type of the PDU set corresponding to the current data flow and the correspondence between a data flow and a first protocol entity, a type of a PDU set corresponding to the current first protocol entity.

That the access layer of the UE determines the type of the PDU set corresponding to the DRB and/or the type of the PDU set corresponding to the first protocol entity may be the same as that in Example 1. For brevity, details are not described herein.

In step S916, the access layer of the UE indicates, to the network device, one or more of the following: the type of the PDU set corresponding to the data flow, the type of the PDU set corresponding to the DRB, and the type of the PDU set corresponding to the first protocol entity.

The access layer of the UE may indicate, to the base station by using RRC signaling, one or more of the type of the PDU set corresponding to the data flow, the type of the PDU set corresponding to the DRB, and the type of the PDU set corresponding to the first protocol entity, or the access layer of the UE may indicate, to the base station by using a MAC CE, one or more of the type of the PDU set corresponding to the data flow, the type of the PDU set corresponding to the DRB, and the type of the PDU set corresponding to the first protocol entity, or the access layer of the UE may indicate, to the base station, by using a PDCP control PDU, one or more of the type of the PDU set corresponding to the data flow, the type of the PDU set corresponding to the DRB, and the type of the PDU set corresponding to the first protocol entity.

In some embodiments, when indicating the type of the PDU set to the base station, the UE may further indicate the first condition described above, for example, conditions 1A to 14 A and/or 1B-14B corresponding to uplink data and/or conditions 1A to 14 A and/or 1B to 14B corresponding to downlink data. After receiving the indication from the terminal device, the base station may determine a scheduling policy for the downlink data based on a condition corresponding to the downlink data, or determine, based on a condition corresponding to the uplink data, an amount of data required to be transmitted by the UE, thereby performing proper scheduling for the UE.

In the solution shown in FIG. 9, the application layer of the UE may indicate, to the access layer of the UE or the network device, a type of a PDU set corresponding to the uplink data flow and/or a type of a PDU set corresponding to the downlink data flow.

### Example 3

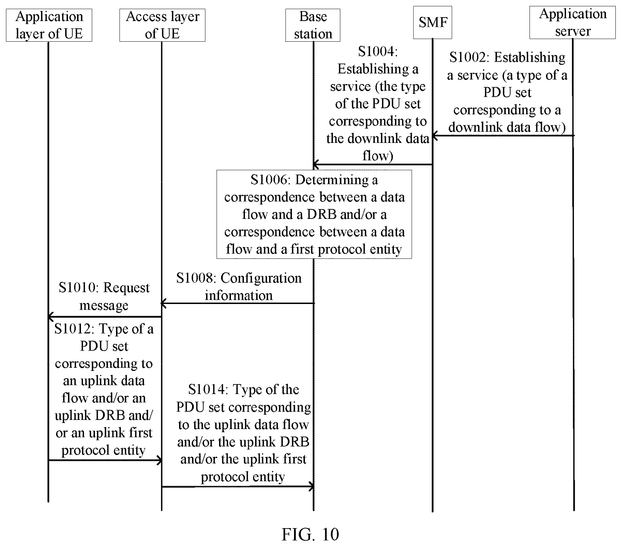

FIG. 10 shows a scheme in which a type of an uplink PDU set is indicated by a UE side and a type of a downlink PDU set is indicated by an application server. Usually, a type of a PDU set depends on an algorithm of a video encoder. Therefore, the type of the downlink PDU set may be determined by the application server, and the type of the uplink PDU set may be determined by the UE side. For content not described in detail in FIG. 10, reference may be made to the foregoing description of FIG. 8 and FIG. 9.

Referring to FIG. 10, in step S1002, a service is established between an application server and an SMF, and the application server indicates, to the SMF, a type of a PDU set corresponding to a downlink data flow.

In step S1004, a service is established between the SMF and a base station, and the SMF indicates, to the base station, the type of the PDU set corresponding to the downlink data flow.

In step S1006, the base station determines a correspondence between a data flow and a DRB and/or a correspondence between a data flow and a first protocol entity.

In step S1008, the base station sends configuration information to an application layer of a UE, where the configuration information may be used to configure one or more of the following: the correspondence between a data flow and a DRB, a current data flow, a current DRB, the correspondence between a data flow and a first protocol entity, and a current first protocol entity. In addition, the base station may further indicate, to the application layer of the UE, one or more of the type of the PDU set corresponding to the downlink data flow, a type of a PDU set corresponding to a downlink DRB, and a type of a PDU set corresponding to a downlink first protocol entity.

In some embodiments, the base station may determine, based on the type of the PDU set corresponding to the downlink data flow and the correspondence between a data flow and a DRB, the type of the PDU set corresponding to the downlink DRB. In some embodiments, the base station may determine, based on the type of the PDU set corresponding to the downlink data flow and the correspondence between a data flow and a first protocol entity, the type of the PDU set corresponding to the downlink first protocol entity. For a specific determining manner, reference may be made to the solution described above in FIG. 8.

In step S1010, an access layer of the UE sends a request message to the application layer of the UE to request a type of an uplink PDU set. The type of the uplink PDU set may include one or more of the following: a type of a PDU set corresponding to an uplink data flow, a type of a PDU set corresponding to an uplink DRB, and a type of a PDU set corresponding to an uplink first protocol entity. In some embodiments, the request message may further carry one or more of the uplink data flow, the uplink DRB, a correspondence between an uplink data flow and an uplink DRB, the uplink first protocol entity, and a correspondence between an uplink data flow and an uplink first protocol entity.

After receiving the request from the access layer of the UE, the application layer of the UE may determine, based on the uplink data flow, the type of the PDU set corresponding to the uplink data flow. If the request message carries the correspondence between an uplink data flow and an uplink DRB, the application layer of the UE may determine the type of the PDU set corresponding to the uplink DRB. If the request message carries the correspondence between an uplink data flow and an uplink first protocol entity, the application layer of the UE may determine the type of the PDU set corresponding to the uplink first protocol entity.

That the application layer of the UE determines the type of the PDU set corresponding to the uplink DRB and/or the type of the PDU set corresponding to the uplink first protocol entity may be the same as that in Example 1. For brevity, details are not described herein.

In step S1012, the application layer of the UE indicates, to the access layer of the UE, one or more of the following: the type of the PDU set corresponding to the uplink data flow, the type of the PDU set corresponding to the uplink DRB, and the type of the PDU set corresponding to the uplink first protocol entity.

If the application layer of the UE indicates, to the access layer of the UE, the type of the PDU set corresponding to the uplink data flow, the access layer of the UE may determine, based on the type of the PDU set corresponding to the uplink data flow and the correspondence between an uplink data flow and an uplink DRB, the type of the PDU set corresponding to the uplink DRB, or the access layer of the UE may determine, based on the type of the PDU set corresponding to the uplink data flow and the correspondence between an uplink data flow and an uplink first protocol entity, the type of the PDU set corresponding to the uplink first protocol entity.

That the access layer of the UE determines the type of the PDU set corresponding to the uplink DRB and/or the type of the PDU set corresponding to the uplink first protocol entity may be the same as that in Example 1. For brevity, details are not described herein.

Instep S1014, the access layer of the UE indicates, to the network device, one or more of the following: the type of the PDU set corresponding to the uplink data flow, the type of the PDU set corresponding to the uplink DRB, and the type of the PDU set corresponding to the uplink first protocol entity.

The access layer of the UE may indicate, to the base station by using RRC signaling, one or more of the type of the PDU set corresponding to the uplink data flow, the type of the PDU set corresponding to the uplink DRB, and the type of the PDU set corresponding to the uplink first protocol entity, or the access layer of the UE may indicate, to the base station by using a MAC CE, one or more of the type of the PDU set corresponding to the uplink data flow, the type of the PDU set corresponding to the uplink DRB, and the type of the PDU set corresponding to the uplink first protocol entity, or the access layer of the UE may indicate, to the base station by using a PDCP control PDU, one or more of the type of the PDU set corresponding to the uplink data flow, the type of the PDU set corresponding to the uplink DRB, and the type of the PDU set corresponding to the uplink first protocol entity.

In some embodiments, when indicating the type of the uplink PDU set to the base station, the UE may further indicate the first condition described above, for example, conditions 1A to 14 A and/or 1B-14B corresponding to uplink data and/or conditions 1A to 14 A and/or 1B to 14B corresponding to downlink data. After receiving the indication from the terminal device, the base station may determine a scheduling policy for the downlink data based on a condition corresponding to the downlink data, or determine, based on a condition corresponding to the uplink data, an amount of data required to be transmitted by the UE, thereby performing proper scheduling for the UE.

In some embodiments, if types of a plurality of PDU sets corresponding to one data flow are the same, indication may be performed in a manner of notifying by using signaling described above. However, there is also a case in which types of a plurality of PDU sets corresponding to one data flow are different. In this case, the types of the PDU sets may be indicated by using a user plane message. That is, the first indication information may be carried in a user plane message.

In some embodiments, the first indication information may be carried in a control PDU. The control PDU may be an independent control PDU, where the control PDU is independent of a data PDU in the PDU set. The control PDU may be located at any location of the PDU set. For example, the control PDU may be located before a first PDU in the PDU set. For another example, the control PDU may be located after a last PDU in the PDU set. For another example, the control PDU may be located between any two PDUs in the PDU set.

In some embodiments, the control PDU may be a PDCP control PDU. For example, between the base station and the terminal device, the first indication information may be carried in a PDCP control PDU.

In some embodiments, the first indication information may be carried in a data PDU. The data PDU may be any one or more data PDUs in the PDU set. For example, the first indication information may be carried in a first data PDU in the PDU set. For another example, the first indication information may be carried in a last data PDU in the PDU set. For another example, the first indication information may be carried in any data PDU in the middle of the PDU set.

In some embodiments, the first indication information may be carried in a header of a data PDU.

For downlink transmission, the first indication information may be transmitted to a terminal device through an application server, a UPF, or a base station. Alternatively, the first indication information may be transmitted to an access layer of the terminal device through an application server, a UPF, or a base station. The access layer of the terminal device may determine, based on one or more of UE implementation, a requirement of a decoder, and a requirement of the application layer, whether to transmit the first indication information to the application layer of the terminal device.

For uplink transmission, the first indication information may be transmitted to a base station through a terminal device, or the first indication information may be transmitted to a base station through an application layer of a terminal device or an access layer of the terminal device. The base station may determine, based on base station implementation and/or a requirement of the application server, whether to transmit the first indication information to the UPF. The UPF may determine, based on the requirement of the application server, whether to transmit the first indication information to the application server.

In some embodiments, between different entities, the first indication information may be carried in a same manner or in different manners. For example, between some entities, the first indication information is carried in a control PDU, and between some entities, the first indication information is carried in a data PDU. For another example, between all entities, the first indication information is carried in a data PDU. However, between different entities, the first indication information may be carried in data PDUs that are different in location.

In this process, the related entities may include an application server, a UPF, a base station, an access layer of a terminal device, and an application layer of the terminal device. Examples are given below for description.

For downlink transmission, the first indication information is sent from the application server, and then arrives at the base station through the UPF. The base station may send or may not send the first indication information to the terminal device. If the base station sends the first indication information to the terminal device, the base station may modify a format of the first indication information. Because a protocol stack between the base station and the terminal device is different from a protocol stack between the base station and the UPF, the base station may modify the format of the first indication information. For example, the base station may generate a PDCP control PDU, where the PDCP control PDU carries the first indication information. In some embodiments, the base station may also carry the first indication information in a PDCP header of one or more data packets of the PDU set.

For uplink transmission, the first indication information is sent from the application layer of the terminal device, and then transmitted to the access layer of the terminal device. The terminal device may send the first indication information to the base station by using a PDCP control PDU.

In some embodiments, each PDU set may carry the first indication information to indicate a type of the PDU set. In some other embodiments, only in a case that a type of a PDU set has changed, the type of the PDU set may be indicated by using the first indication information. If the type of the PDU set has not changed, the PDU set may not carry the first indication information, to reduce signaling overheads. That is, a type of a PDU set, whose type has changed, in a plurality of PDU sets is indicated by using the first indication information.

The foregoing indication manner may be applied to transmission between any two entities, for example, the foregoing indication manner may be applied to one or more of the following: a transmission between an application server and a UPF, a transmission between a UPF and a base station, a transmission between a base station and an access layer of a UE, and a transmission between an access layer of a UE and an application layer of a UE.

For uplink transmission and/or downlink transmission, between different entities, indication manners used may be the same or may be different. For example, between different entities, each PDU set carries the first indication information. For another example, between different entities, only a PDU set whose type has changed carries the first indication information. For another example, between some entities, each PDU set carries the first indication information, and between some entities, only a PDU set whose type has changed carries the first indication information. In other words, between different entities, indication manners used may be independent of each other.

For example, between the application server and the UPF, a PDU set carries the first indication information only when a type of the PDU set has changed. If a type of a PDU set has not changed, the PDU set may not carry the first indication information. Between the UPF and the base station, the indication manner may be changed so that each PDU set carries the first indication information. In this case, the UPF is required to regenerate indication information and cannot transparently transmit the indication from the application server.

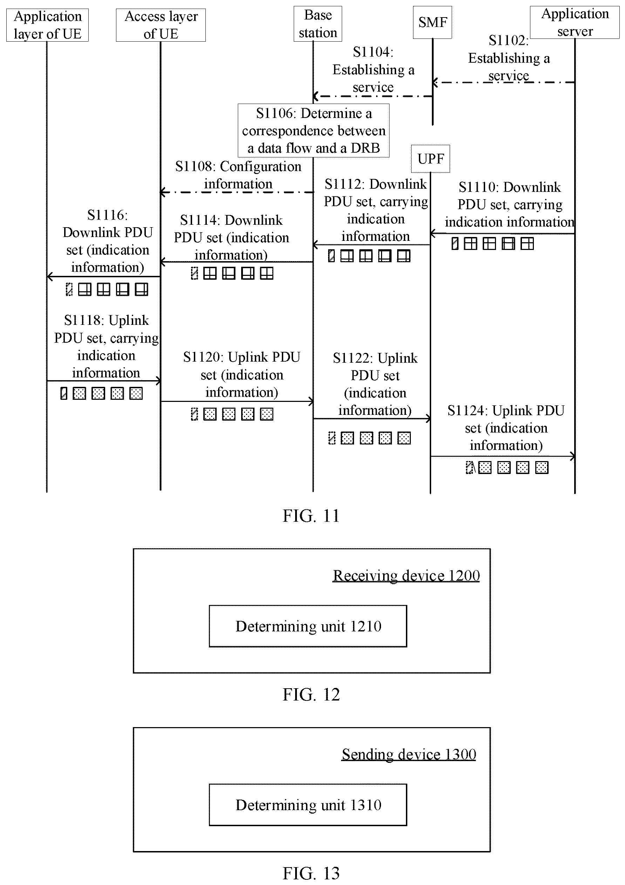

The following describes in detail a manner in which a type of a PDU set is indicated by using a user plane with reference to FIG. 11.

### Example 4

Referring to FIG. 11, a dashed line indicates signaling transmission, and a solid line indicates data transmission. A grid-filled rectangle represents a downlink data packet, a dot-filled rectangle represents an uplink data packet, and a slash-filled rectangle represents indication information for a type of a PDU set. The dashed rectangle indicates that the indication information is optional, that is, a PDU set may carry or may not carry the indication information.

The indication information may be carried in a control PDU, or may be carried in a data PDU. If the indication information is carried in a control PDU, the control PDU may be a control PDU independent of another data PDU. The control PDU may be located before a first data packet of a PDU set, after a last data packet of a PDU set, or between any two data packets of a PDU set.

If the indication information is carried in a data PDU, the data PDU may be any one or more data packets in a PDU set. The indication information may be carried in a header of the data packet.

Steps S1102 to S1108 are similar to steps S904 to S910 shown in FIG. 9.

In step S1102, a service is established between an application server and an SMF. The service may be, for example, an XR service.

In step S1104, a service is established between the SMF and a base station. The service may be, for example, an XR service.

In step S1106, the base station determines a correspondence between a data flow and a DRB.

In step S1108, the base station sends configuration information to an access layer of a UE, where the configuration information may be used to configure one or more of the following: the correspondence between a data flow and a DRB, a current data flow, or a current DRB.

In step S1110, the application server sends a downlink PDU set to a UPF. The downlink PDU set may include a plurality of data packets. The downlink PDU set may carry indication information to indicate a type of the downlink PDU set.

In step S1112, the UPF sends the downlink PDU set to the base station.

In step S1114, the base station sends the downlink PDU set to the access layer of the UE. The downlink PDU set may carry or may not carry the indication information.

In some embodiments, the base station may modify a format of the indication information, for example, the base station may generate a PDCP control PDU and indicate the type of the downlink PDU set to the access layer of the UE by using the PDCP control PDU.

In some embodiments, the base station may alternatively use a PDCP header of one or more data packets of the PDU set to carry the indication information, so as to indicate the type of downlink PDU set.

In step S1116, if the base station indicates the type of the downlink PDU set to the access layer of the UE, the access layer of the UE may determine, based on a requirement of a decoder (such as a video decoder), UE implementation, or a requirement of an application layer of the UE, whether to send the indication information to the application layer of the UE.

The transmission of the downlink PDU set is described above, and the transmission of the uplink PDU set is described below.

In step S1118, the application layer of the UE sends an uplink PDU set to the access layer of the UE. The downlink PDU set may include a plurality of data packets. The downlink PDU set may carry indication information indicating a type of the downlink PDU set.

In step S1120, the access layer of the UE sends the uplink PDU set to the base station. The uplink PDU set may carry or may not carry indication information. The access layer of the UE may determine, based on a configuration of the base station or UE implementation, whether to send the indication information to the base station.

In some embodiments, the access layer of the UE may send the indication information to the base station by using a PDCP control PDU. In some other embodiments, the access layer of the UE may send the indication information to the base station by using a PDCP header of one or more data packets of a PDU set.

In step S1122, the base station sends the uplink PDU set to the UPF. The uplink PDU set may carry or may not carry indication information. The base station may determine, based on base station implementation or a requirement of the application server, whether to carry the indication information in the uplink PDU set.

In step S1124, the UPF sends the uplink PDU set to the application server. The uplink PDU set may carry or may not carry indication information. The UPF may determine, based on the requirement of the application server, whether to carry the indication information in the uplink PDU set.

In the solution shown in FIG. 11, a type of each PDU set may be indicated. In some embodiments, only in a case that a type of a PDU set has changed, the type of the PDU set is indicated. If a type of a PDU set has not changed, the type of the PDU set may not be indicated. Such an indication manner may be applied to each transmission shown in FIG. 11, for example, any one or a plurality of transmissions between the application server and the UPF, between the UPF and the base station, between the base station and the access layer of the UE, or between the access layer of the UE and the application layer of the UE.

For uplink transmission and/or downlink transmission, the type of the PDU set may be indicated in a same indication manner in all transmissions, or the type of the PDU set may be indicated in different indication manners in different transmissions.

For example, all transmissions may adopt the indication manner of "indicating a type of each PDU set", or all transmissions may adopt the indication manner of "indicating, only in a case that a type of a PDU set has changed, the type of the PDU set".

For another example, different transmissions may adopt indication manners that are independent of each other. For example, for a transmission between the application server and the UPF, a type of a PDU set is indicated only in a case that the type of the PDU set has changed. If a type of a PDU set has not changed, the type of the PDU set may not be indicated. For a transmission between the UPF and the base station, a type of each PDU set may be indicated. In the case, the UPF is required to regenerate indication information and cannot transparently transmit indication information from the application server.

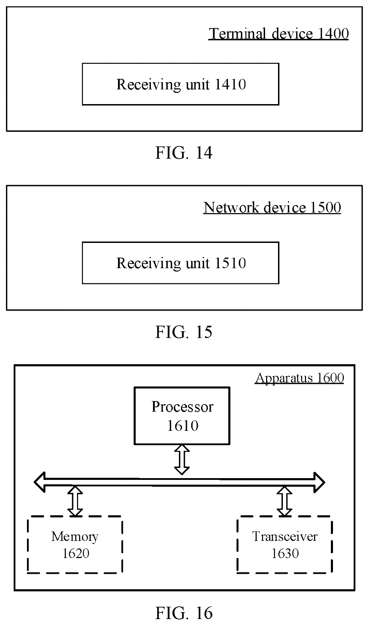

The method embodiments of the present application are described in detail above with reference to FIG. 1 to FIG. 11. Apparatus embodiments of the present application are described in detail below with reference to FIG. 12 and FIG. 16. It should be understood that the description of the method embodiments corresponds to the description of the apparatus embodiments, and therefore, for parts that are not described in detail, reference may be made to the foregoing method embodiments.

FIG. 12 is a schematic block diagram of a receiving device according to an embodiment of the present application. The receiving device may be any one of the receiving devices described above. The receiving device 1200 may be a terminal device or a network device. The receiving device may include a determining unit 1210.

The determining unit 1210 is for determining a first transmission policy, where the first transmission policy is used to determine whether a first protocol layer submits a data packet in a first protocol data unit PDU set to an upper layer, and the first transmission policy is related to a type of the first PDU set.

In some embodiments, the first transmission policy includes one or more of the following: submitting a successfully received data packet to the upper layer by using the first protocol layer; skipping submitting a successfully received data packet to the upper layer by using the first protocol layer; and determining, based on a first condition, whether the first protocol layer submits a successfully received data packet to the upper layer.

In some embodiments, the first condition is related to a first data packet, and the first data packet includes a successfully received data packet and/or an unsuccessfully received data packet in the first PDU set.

In some embodiments, the first condition is related to one or more of following information: a quantity of first data packets; a quantity of bits of the first data packet; a proportion of a quantity of first data packets to a total quantity of data packets in the first PDU set; a proportion of a quantity of bits of the first data packet to a total quantity of bits of data packets in the first PDU set; and a location of the first data packet in the first PDU set.

In some embodiments, the location of the first data packet in the first PDU set includes location continuity of the first data packet in the first PDU set.

In some embodiments, the first condition includes one or more of the following: a quantity of successfully received data packets in the first PDU set is greater than or equal to a first threshold; a quantity of unsuccessfully received data packets in the first PDU set is less than or equal to a second threshold; a quantity of bits of successfully received data packets in the first PDU set is greater than or equal to a third threshold; a quantity of bits of unsuccessfully received data packets in the first PDU set is less than or equal to a fourth threshold; a proportion of a quantity of successfully received data packets in the first PDU set to the total quantity of data packets in the first PDU set is greater than or equal to a fifth threshold; a proportion of a quantity of unsuccessfully received data packets in the first PDU set to the total quantity of data packets in the first PDU set is less than or equal to a sixth threshold; a proportion of bits of successfully received data packets in the first PDU set to a total quantity of bits of data packets in the first PDU set is greater than or equal to a seventh threshold; a proportion of bits of unsuccessfully received data packets in the first PDU set to a total quantity of bits of data packets in the first PDU set is less than or equal to an eighth threshold; a quantity of successfully received consecutive data packets in the first PDU set is greater than or equal to a ninth threshold; a quantity of unsuccessfully received data packets, whose locations are consecutive, in the first PDU set is less than or equal to a tenth threshold; a quantity of bits of successfully received data packets, whose locations are consecutive, in the first PDU set is greater than or equal to an eleventh threshold; a quantity of bits of unsuccessfully received data packets, whose locations are consecutive, in the first PDU set is less than or equal to a twelfth threshold; locations of successfully received data packets in the first PDU set are consecutive; and locations of unsuccessfully received data packets in the first PDU set are consecutive.

In some embodiments, the receiving device further includes a processing unit for: in a case that the first condition is met, submitting the successfully received data packet to the upper layer by using the first protocol layer; and/or in a case that the first condition is not met, skipping submitting the successfully received data packet to the upper layer by using the first protocol layer.

In some embodiments, the first transmission policy varies with the type of the first PDU set.

FIG. 13 is a schematic block diagram of a sending device according to an embodiment of the present application. The sending device may be any one of the sending devices described above. The sending device 1300 may be a terminal device or a network device. The sending device may include a determining unit 1310.

The determining unit 1310 is for determining a second transmission policy, where the second transmission policy is used to determine a transmission manner of transmitting a data packet in a second PDU set to a receiving device, and the second transmission policy is related to a type of the second PDU set.

In some embodiments, the second transmission policy is related to one or more of the following information: a transmission resource of the data packet; a planned delay range of the data packet; and a condition for successful transmission of the second PDU set.

In some embodiments, the second transmission policy is related to a TB used for transmitting the data packet and/or a BLER of the transmission resource.

In some embodiments, if the type of the second PDU set is a first type, the second transmission policy is related to one or more of the following: the TB for transmitting the data packet; the BLER of the transmission resource; and the planned delay range of the data packet.

In some embodiments, if the type of the second PDU set is the first type, the second transmission policy includes one or more of the following: transmitting a plurality of data packets belonging to a same PDU set by using a same transmission TB; transmitting a plurality of data packets belonging to a same PDU set by using transmission resources that are same in BLER; if it is anticipated that the sending device is incapable of completing transmission of remaining data packets in the second PDU set within the planned delay range, abandoning transmission of the remaining one or more data packets; and if a part of data packets in the second PDU set are successfully transmitted and another part of data packets are unsuccessfully transmitted, transmitting the unsuccessfully transmitted data packet by using a transmission resource having a first BLER, where the first BLER is less than or equal to a BLER of a transmission resource used by a previous transmission of a data packet.

In some embodiments, if the type of the second PDU set is a second type, the second transmission policy is related to one or more of the following: the planned delay range of the data packet; and the condition for successful transmission of the second PDU set.

In some embodiments, if the type of the second PDU set is the second type, the second transmission policy includes: if it is anticipated that the sending device is incapable of completing transmission of remaining data packets in the second PDU set within the planned delay range, continuing transmission of the remaining data packets; or if it is anticipated that the sending device is incapable of completing transmission of remaining data packets in the second PDU set within the planned delay range, determining, based on the condition for successful transmission of the first PDU set, whether to abandon transmission of the remaining one or more data packets.

FIG. 14 is a schematic block diagram of a terminal device according to an embodiment of the present application. The terminal device may be any one of the terminal devices described above. The terminal device 1400 may include a receiving unit 1410.

The receiving unit 1410 is configured for receiving first indication information, where the first indication information is used to indicate a type of a PDU set; where the first indication information is sent by an application server to the terminal device; and/or the first indication information is sent by an application layer of the terminal device to an access layer of the terminal device; and/or the first indication information is sent by a network device to the terminal device.

In some embodiments, the first indication information is used to indicate a type of a PDU set corresponding to a DRB, and the type of the PDU set corresponding to the DRB is determined based on a type of a PDU set corresponding to a data flow and a correspondence between a data flow and a DRB.

In some embodiments, the type of the PDU set corresponding to the data flow is determined by the application layer of the terminal device and/or the application server.

In some embodiments, if the type of the PDU set corresponding to the data flow is determined by the application layer of the terminal device, the terminal device further includes: a sending unit, for sending second indication information to the network device, where the second indication information is used to indicate the type of the PDU set corresponding to the data flow and/or the type of the PDU set corresponding to the DRB.

In some embodiments, if the type of the PDU set corresponding to the data flow is determined by the application server, the receiving unit is for: receiving the first indication information sent by the network device, where the first indication information is used to indicate the type of the PDU set corresponding to the data flow and/or the type of the PDU set corresponding to the DRB, and the type of the PDU set corresponding to the data flow is indicated to the network device by the application server.

In some embodiments, the type of PDU set corresponding to the DRB is determined by one or more of the following: a network device, an application layer of a terminal device, and an access layer of a terminal device.

In some embodiments, if all PDU sets corresponding to a first DRB are of a first type, the first indication information is used to indicate that a type of the PDU set corresponding to the first DRB is the first type; or if all PDU sets corresponding to a first DRB are of a second type, the first indication information is used to indicate that a type of the PDU set corresponding to the first DRB is the second type; or if a part of PDU sets corresponding to a first DRB are of a first type and another part of PDU sets are of a second type, the first indication information is used to indicate that types of PDU sets corresponding to the first DRB include the first type and the second type.

In some embodiments, the first indication information is carried in a user plane message.

In some embodiments, the first indication information is carried in one or more of a control PDU and a data PDU.

In some embodiments, the first indication information is carried in a header of the data PDU.

In some embodiments, a type of each PDU set in a plurality of PDU sets is indicated by the first indication information, or a type of a PDU set, whose type has changed, in a plurality of PDU sets is indicated by the first indication information.

In some embodiments, the PDU sets include an uplink PDU set and a downlink PDU set, a type of the uplink PDU set is determined by the application layer of the terminal device, and/or a type of the downlink PDU set is determined by the application server.

FIG. 15 is a schematic block diagram of a network device according to an embodiment of the present application. The network device may be any one of the network devices described above. The network device 1500 may include a receiving unit 1510.

The receiving unit 1510 is configured to receive third indication information, where the third indication information is used to indicate a type of a PDU set. The third indication information is sent by an application server to the network device; and/or the third indication information is sent by the terminal device to the network device.

In some embodiments, the third indication information is used to indicate a type of a PDU set corresponding to a DRB, and the type of the PDU set corresponding to the DRB is determined based on a type of a PDU set corresponding to a data flow and a correspondence between a data flow and a DRB.

In some embodiments, the type of the PDU set corresponding to the data flow is determined by the application layer of the terminal device and/or the application server.

In some embodiments, if the type of the PDU set corresponding to the data flow is determined by the application layer of the terminal device, the receiving unit is further for: receiving the third indication information sent by the terminal device, where the third indication information is used to indicate the type of the PDU set corresponding to the data flow and/or the type of the PDU set corresponding to the DRB.

In some embodiments, if the type of the PDU set corresponding to the data flow is determined by the application server, the receiving unit is further for: receiving the third indication information sent by the application server, where the third indication information is used to indicate the type of the PDU set corresponding to the data flow.

In some embodiments, the type of the PDU set corresponding to the DRB is determined by one or more of the following: a network device, an application layer of a terminal device, and an access layer of a terminal device.

In some embodiments, if all PDU sets corresponding to a first DRB are of a first type, the third indication information is used to indicate that a type of the PDU set corresponding to the first DRB is the first type; or if all PDU sets corresponding to a first DRB are of a second type, the third indication information is used to indicate that a type of the PDU set corresponding to the first DRB is the second type; or if types of PDU sets corresponding to a first DRB include a first type and a second type, the third indication information is used to indicate that the types of the PDU sets corresponding to the first DRB include the first type and the second type.

In some embodiments, the third indication information is carried in a user plane message.

In some embodiments, the third indication information is carried in one or more of the following: a control PDU, or a data PDU in a PDU set.

In some embodiments, the third indication information is carried in a header of the data PDU.

In some embodiments, a type of each PDU set in a plurality of PDU sets is indicated by the third indication information, or a type of a PDU set, whose type has changed, in a plurality of PDU sets is indicated by the third indication information.

In some embodiments, the PDU set includes an uplink PDU set and a downlink PDU set, a type of the uplink PDU set is determined by the application layer of the terminal device, and/or a type of the downlink PDU set is determined by the application server.

FIG. 16 is a schematic structural diagram of a communications apparatus according to an embodiment of the present application. The dashed lines in FIG. 16 indicate that the unit or module is optional. The apparatus 1600 may be configured to implement the methods described in the foregoing method embodiments. The apparatus 1600 may be a chip, a terminal device, or a network device.

The apparatus 1600 may include one or more processors 1610. The processor 1610 may allow the apparatus 1600 to implement the methods described in the foregoing method embodiments. The processor 1610 may be a general-purpose processor or a dedicated processor. For example, the processor may be a central processing unit (CPU). Alternatively, the processor may be another general-purpose processor, a digital signal processor (DSP), an applicationspecific integrated circuit (ASIC), a field-programmable gate array (FPGA) or another programmable logic device, a discrete gate or transistor logic device, a discrete hardware component, or the like. The general-purpose processor may be a microprocessor, or the processor may be any conventional processor or the like.

The apparatus 1600 may further include one or more memories 1620. The memory 1620 stores a program executable by the processor 1610 to cause the processor 1610 to perform the methods described in the foregoing method embodiments. The memory 1620 may be independent of the processor 1610 or may be integrated into the processor 1610.

The apparatus 1600 may further include a transceiver 1630. The processor 1610 may communicate with another device or chip through the transceiver 1630. For example, the processor 1610 may send data to and receive data from another device or chip through the transceiver 1630.

An embodiment of the present application further provides a computer-readable storage medium for storing a program. The computer-readable storage medium may be applied to the terminal or the network device provided in embodiments of the present application, and the program causes a computer to execute the methods performed by the terminal or the network device in various embodiments of the present application.

An embodiment of the present application further provides a computer program product. The computer program product includes a program. The computer program product may be applied to the terminal or the network device provided in embodiments of the present application, and the program causes a computer to execute the methods performed by the terminal or the network device in various embodiments of the present application.

An embodiment of the present application further provides a computer program. The computer program may be applied to the terminal or the network device provided in embodiments of the present application, and the computer program causes a computer to execute the methods performed by the terminal or the network device in various embodiments of the present application.

It should be understood that the terms "system" and "network" in the present application may be used interchangeably. In addition, the terms used in the present application are only used to explain the specific embodiments of the present application, and are not intended to limit the present application. The terms "first", "second", "third", "fourth", and the like in the specification, claims, and drawings of the present application are used to distinguish between different objects, rather than to describe a specific order. In addition, the terms "include" and "have" and any variations thereof are intended to cover a non-exclusive inclusion.

In embodiments of the present application, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of the present application, "B that is corresponding to A" means that B is associated with A, and B may be determined based on A. However, it should also be understood that, determining B based on A does not mean determining B based on only A, but instead B may be determined based on A and/or other information.

In embodiments of the present application, the term "correspond" may mean that there is a direct or indirect correspondence between the two, or may mean that there is an association relationship between the two, or may mean that there is a relationship such as indicating and being indicated, or configuring and being configured.

In embodiments of the present application, "predefined" or "preconfigured" may be implemented by pre-storing corresponding codes, tables, or other forms that may be used to indicate related information in a device (for example, including a terminal device and a network device), and a specific implementation thereof is not limited in the present application. For example, pre-defined may refer to being defined in a protocol.

In embodiments of the present application, the "protocol" may refer to a standard protocol in the communications field, and may include, for example, an LTE protocol, an NR protocol, and a related protocol applied to a future communications system, which is not limited in the present application.

In embodiments of the present application, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In embodiments of the present application, sequence numbers of the foregoing processes do not mean execution sequences. The execution sequences of the processes should be determined according to functions and internal logic of the processes, and should not be construed as any limitation on the implementation processes of embodiments of the present application.

In several embodiments provided in the present application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatus or units may be implemented in electronic, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of embodiments.

In addition, function units in embodiments of the present application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid-state drive (SSD)), or the like.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A wireless communication method, comprising:
determining, by a receiving device, a first transmission policy, wherein the first transmission policy is used to determine whether a first protocol layer submits a data packet in a first protocol data unit PDU set to an upper layer, and the first transmission policy is related to a type of the first PDU set.

2. The method according to claim 1, wherein the first transmission policy comprises one or more of following:
submitting a successfully received data packet to the upper layer by using the first protocol layer;
skipping submitting a successfully received data packet to the upper layer by using the first protocol layer;
determining, based on a first condition, whether the first protocol layer submits a successfully received data packet to the upper layer;
after a data packet in the first PDU set is submitted to the upper layer by using the first protocol layer, whether to instruct a lower layer to delete a remaining data packet in the first PDU set; and
after a data packet in the first PDU set is submitted to the upper layer by using the first protocol layer, submitting or skipping submitting a remaining data packet in the first PDU set to the upper layer.

3. The method according to claim 2, wherein the first condition is related to a first data packet, and the first data packet comprises a successfully received data packet and/or an unsuccessfully received data packet in the first PDU set.

4. The method according to claim 3, wherein the first condition is related to one or more of following information:
a quantity of first data packets;
a quantity of bits of the first data packet;
a proportion of a quantity of first data packets to a total quantity of data packets in the first PDU set;
a proportion of a quantity of bits of the first data packet to a total quantity of bits of data packets in the first PDU set; and
a location of the first data packet in the first PDU set.

5. The method according to claim 4, wherein the location of the first data packet in the first PDU set comprises location continuity of the first data packet in the first PDU set.

6. The method according to claim 5, wherein the first condition comprises one or more of following:
a quantity of successfully received data packets in the first PDU set is greater than or equal to a first threshold;
a quantity of unsuccessfully received data packets in the first PDU set is less than or equal to a second threshold;
a quantity of bits of successfully received data packets in the first PDU set is greater than or equal to a third threshold;
a quantity of bits of unsuccessfully received data packets in the first PDU set is less than or equal to a fourth threshold;
a proportion of a quantity of successfully received data packets in the first PDU set to the total quantity of data packets in the first PDU set is greater than or equal to a fifth threshold;
a proportion of a quantity of unsuccessfully received data packets in the first PDU set to the total quantity of data packets in the first PDU set is less than or equal to a sixth threshold;
a proportion of bits of successfully received data packets in the first PDU set to a total quantity of bits of data packets in the first PDU set is greater than or equal to a seventh threshold;
a proportion of bits of unsuccessfully received data packets in the first PDU set to a total quantity of bits of data packets in the first PDU set is less than or equal to an eighth threshold;
a quantity of successfully received consecutive data packets in the first PDU set is greater than or equal to a ninth threshold;
a quantity of unsuccessfully received data packets, whose locations are consecutive, in the first PDU set is less than or equal to a tenth threshold;
a quantity of bits of successfully received data packets, whose locations are consecutive, in the first PDU set is greater than or equal to an eleventh threshold;
a quantity of bits of unsuccessfully received data packets, whose locations are consecutive, in the first PDU set is less than or equal to a twelfth threshold;
locations of successfully received data packets in the first PDU set are consecutive; and
locations of unsuccessfully received data packets in the first PDU set are consecutive.

7. The method according to any one of claims 2 to 6, wherein the method further comprises:
in a case that the first condition is met, submitting, by the receiving device, the successfully received data packet to the upper layer by using the first protocol layer; and/or
in a case that the first condition is not met, skipping submitting, by the receiving device, the successfully received data packet to the upper layer by using the first protocol layer, and/or deleting the successfully received data packet.

8. The method according to any one of claims 1 to 7, wherein the first transmission policy varies with the type of the first PDU set.

9. A wireless communication method, comprising:
determining, by a sending device, a second transmission policy, wherein the second transmission policy is used to determine a transmission manner of transmitting a data packet in a second protocol data unit PDU set to a receiving device, and the second transmission policy is related to a type of the second PDU set.

10. The method according to claim 9, wherein the second transmission policy is related to one or more of following information:
a transmission resource of the data packet;
a planned delay range of the data packet; and
a condition for successful transmission of the second PDU set.

11. The method according to claim 10, wherein the second transmission policy is related to a transport block TB used for transmitting the data packet and/or a block error rate BLER of the transmission resource.

12. The method according to claim 11, wherein if the type of the second PDU set is a first type, the second transmission policy is related to one or more of following:
the TB for transmitting the data packet;
the BLER of the transmission resource; and
the planned delay range of the data packet.

13. The method according to claim 12, wherein if the type of the second PDU set is the first type, the second transmission policy comprises one or more of following:
transmitting a plurality of data packets belonging to a same PDU set by using a same transmission TB;
transmitting a plurality of data packets belonging to a same PDU set by using transmission resources that are same in BLER;
if it is anticipated that the sending device is incapable of completing transmission of remaining data packets in the second PDU set within the planned delay range, abandoning transmission of the remaining one or more data packets; and
if a part of data packets in the second PDU set are successfully transmitted and another part of the data packets in the second PDU set are unsuccessfully transmitted, transmitting the unsuccessfully transmitted data packet by using a transmission resource having a first BLER, wherein the first BLER is less than or equal to a BLER of a transmission resource used for a previous transmission of a data packet.

14. The method according to claim 10, wherein if the type of the second PDU set is a second type, the second transmission policy is related to one or more of following:
the planned delay range of the data packet; and
the condition for successful transmission of the second PDU set.

15. The method according to claim 14, wherein if the type of the second PDU set is the second type, the second transmission policy comprises:
if it is anticipated that the sending device is incapable of completing transmission of remaining data packets in the second PDU set within the planned delay range, continuing transmission of the remaining data packets; or
if it is anticipated that the sending device is incapable of completing transmission of remaining data packets in the second PDU set within the planned delay range, determining, based on the condition for successful transmission of the first PDU set, whether to abandon transmission of the remaining one or more data packets.

16. A wireless communication method, comprising:
receiving, by a terminal device, first indication information, wherein the first indication information is used to indicate a type of a protocol data unit PDU set;
wherein the first indication information is sent by an application server to the terminal device; and/or
the first indication information is sent by an application layer of the terminal device to an access layer of the terminal device; and/or
the first indication information is sent by a network device to the terminal device.

17. The method according to claim 16, wherein the first indication information is used to indicate a type of a PDU set corresponding to a data radio bearer DRB, and the type of the PDU set corresponding to the DRB is determined based on a type of a PDU set corresponding to a data flow and a correspondence between a data flow and a DRB.

18. The method according to claim 16, wherein the first indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

19. The method according to claim 17 or 18, wherein the type of the PDU set corresponding to the data flow is determined by the application layer of the terminal device and/or the application server.

20. The method according to claim 19, wherein if the type of the PDU set corresponding to the data flow is determined by the application layer of the terminal device, the method further comprises:
sending, by the terminal device, second indication information to the network device, wherein the second indication information is used to indicate one or more of following: the type of the PDU set corresponding to the data flow, the type of the PDU set corresponding to the DRB, and the type of the PDU set corresponding to the first protocol entity.

21. The method according to claim 19, wherein if the type of the PDU set corresponding to the data flow is determined by the application server, the method further comprises:
receiving, by the terminal device, the first indication information sent by the network device, wherein the first indication information is used to indicate one or more of following: the type of the PDU set corresponding to the data flow, the type of the PDU set corresponding to the DRB, and the type of the PDU set corresponding to the first protocol entity, and the type of the PDU set corresponding to the data flow is indicated to the network device by the application server.

22. The method according to any one of claims 17 to 21, wherein the type of the PDU set corresponding to the DRB and/or the type of the PDU set corresponding to the first protocol entity are/is determined by one or more of following: a network device, an application layer of a terminal device, and an access layer of a terminal device.

23. The method according to any one of claims 17 to 22, wherein if all PDU sets corresponding to a first DRB are of a first type, the first indication information is used to indicate that a type of the PDU set corresponding to the first DRB is the first type; or
if all PDU sets corresponding to a first DRB are of a second type, the first indication information is used to indicate that a type of the PDU set corresponding to the first DRB is the second type; or
if a part of PDU sets corresponding to a first DRB are of a first type and another part of the PDU sets are of a second type, the first indication information is used to indicate that types of PDU sets corresponding to the first DRB comprise the first type and the second type.

24. The method according to any one of claims 17 to 22, wherein if all PDU sets corresponding to a first protocol entity are of a first type, the first indication information is used to indicate that the type of the PDU set corresponding to the first protocol entity is the first type; or
if all PDU sets corresponding to a first protocol entity are of a second type, the first indication information is used to indicate that the type of the PDU set corresponding to the first protocol entity is the second type; or
if a part of PDU sets corresponding to a first protocol entity are of a first type and another part of PDU sets are of a second type, the first indication information is used to indicate that types of PDU sets corresponding to the first protocol entity comprise the first type and the second type.

25. The method according to any one of claims 16 to 24, wherein the first indication information is carried in a user plane message.

26. The method according to claim 25, wherein the first indication information is carried in one or more of following: a control PDU or a data PDU.

27. The method according to claim 26, wherein the first indication information is carried in a header of the data PDU.

28. The method according to any one of claims 25 to 27, wherein a type of each PDU set in a plurality of PDU sets is indicated by the first indication information, or a type of a PDU set whose type has changed in a plurality of PDU sets is indicated by the first indication information.

29. The method according to any one of claims 16 to 28, wherein the PDU set comprises an uplink PDU set and a downlink PDU set, a type of the uplink PDU set is determined by the application layer of the terminal device, and/or a type of the downlink PDU set is determined by the application server.

30. A wireless communication method, comprising:
receiving, by a network device, third indication information, wherein the third indication information is used to indicate a type of a protocol data unit PDU set;
wherein the third indication information is sent by an application server to the network device; and/or
the third indication information is sent by a terminal device to the network device.

31. The method according to claim 30, wherein the third indication information is used to indicate a type of a PDU set corresponding to a data radio bearer DRB, and the type of the PDU set corresponding to the DRB is determined based on a type of a PDU set corresponding to a data flow and a correspondence between a data flow and a DRB.

32. The method according to claim 30, wherein the third indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

33. The method according to claim 31 or 32, wherein the type of the PDU set corresponding to the data flow is determined by an application layer of the terminal device and/or the application server.

34. The method according to claim 33, wherein if the type of the PDU set corresponding to the data flow is determined by the application layer of the terminal device, the method further comprises:
receiving, by the network device, the third indication information sent by the terminal device, wherein the third indication information is used to indicate one or more of following: the type of the PDU set corresponding to the data flow, the type of the PDU set corresponding to the DRB, and the type of the PDU set corresponding to the first protocol entity.

35. The method according to claim 33, wherein if the type of the PDU set corresponding to the data flow is determined by the application server, the method further comprises:
receiving, by the network device, the third indication information sent by the application server, wherein the third indication information is used to indicate the type of the PDU set corresponding to the data flow.

36. The method according to any one of claims 31 to 35, wherein the type of the PDU set corresponding to the DRB and/or the type of the PDU set corresponding to the first protocol entity are/is determined by one or more of following: a network device, an application layer of a terminal device, and an access layer of a terminal device.

37. The method according to any one of claims 31 to 36, wherein if all PDU sets corresponding to a first DRB are of a first type, the third indication information is used to indicate that a type of the PDU set corresponding to the first DRB is the first type; or
if all PDU sets corresponding to a first DRB are of a second type, the third indication information is used to indicate that a type of the PDU set corresponding to the first DRB is the second type; or
if a part of PDU sets corresponding to a first DRB are of a first type and another part of the PDU sets are of a second type, the third indication information is used to indicate that the types of the PDU sets corresponding to the first DRB comprise the first type and the second type.

38. The method according to any one of claims 31 to 36, wherein if all PDU sets corresponding to a first protocol entity are of a first type, the first indication information is used to indicate that the type of the PDU set corresponding to the first protocol entity is the first type; or
if all PDU sets corresponding to a first protocol entity are of a second type, the first indication information is used to indicate that the type of the PDU set corresponding to the first protocol entity is the second type; or
if a part of PDU sets corresponding to a first protocol entity are of a first type and another part of the PDU sets are of a second type, the first indication information is used to indicate that types of PDU sets corresponding to the first protocol entity comprise the first type and the second type.

39. The method according to any one of claims 30 to 38, wherein the third indication information is carried in a user plane message.

40. The method according to claim 39, wherein the third indication information is carried in one or more of following: a control PDU, and a data PDU in a PDU set.

41. The method according to claim 40, wherein the third indication information is carried in a header of the data PDU.

42. The method according to any one of claims 39 to 41, wherein a type of each PDU set in a plurality of PDU sets is indicated by the third indication information, or a type of a PDU set whose type has changed in a plurality of PDU sets is indicated by the third indication information.

43. The method according to any one of claims 30 to 42, wherein the PDU set comprises an uplink PDU set and a downlink PDU set, a type of the uplink PDU set is determined by an application layer of the terminal device, and/or a type of the downlink PDU set is determined by the application server.

44. A receiving device, comprising:
a determining unit, for determining a first transmission policy, wherein the first transmission policy is used to determine whether a first protocol layer submits a data packet in a first protocol data unit PDU set to an upper layer, and the first transmission policy is related to a type of the first PDU set.

45. The receiving device according to claim 44, wherein the first transmission policy comprises one or more of following:
submitting a successfully received data packet to the upper layer by using the first protocol layer;
skipping submitting a successfully received data packet to the upper layer by using the first protocol layer;
determining, based on a first condition, whether the first protocol layer submits a successfully received data packet to the upper layer;
after a data packet in the first PDU set is submitted to the upper layer by using the first protocol layer, whether to instruct a lower layer to delete a remaining data packet in the first PDU set; and
after a data packet in the first PDU set is submitted to the upper layer by using the first protocol layer, submitting or skipping submitting a remaining data packet in the first PDU set to the upper layer.

46. The receiving device according to claim 45, wherein the first condition is related to a first data packet, and the first data packet comprises a successfully received data packet and/or an unsuccessfully received data packet in the first PDU set.

47. The receiving device according to claim 46, wherein the first condition is related to one or more of following information:
a quantity of first data packets;
a quantity of bits of the first data packet;
a proportion of a quantity of first data packets to a total quantity of data packets in the first PDU set;
a proportion of a quantity of bits of the first data packet to a total quantity of bits of data packets in the first PDU set; and
a location of the first data packet in the first PDU set.

48. The receiving device according to claim 47, wherein the location of the first data packet in the first PDU set comprises location continuity of the first data packet in the first PDU set.

49. The receiving device according to claim 48, wherein the first condition comprises one or more of following:
a quantity of successfully received data packets in the first PDU set is greater than or equal to a first threshold;
a quantity of unsuccessfully received data packets in the first PDU set is less than or equal to a second threshold;
a quantity of bits of successfully received data packets in the first PDU set is greater than or equal to a third threshold;
a quantity of bits of unsuccessfully received data packets in the first PDU set is less than or equal to a fourth threshold;
a proportion of a quantity of successfully received data packets in the first PDU set to the total quantity of data packets in the first PDU set is greater than or equal to a fifth threshold;
a proportion of a quantity of unsuccessfully received data packets in the first PDU set to the total quantity of data packets in the first PDU set is less than or equal to a sixth threshold;
a proportion of bits of successfully received data packets in the first PDU set to a total quantity of bits of data packets in the first PDU set is greater than or equal to a seventh threshold;
a proportion of bits of unsuccessfully received data packets in the first PDU set to a total quantity of bits of data packets in the first PDU set is less than or equal to an eighth threshold;
a quantity of successfully received consecutive data packets in the first PDU set is greater than or equal to a ninth threshold;
a quantity of unsuccessfully received data packets, whose locations are consecutive, in the first PDU set is less than or equal to a tenth threshold;
a quantity of bits of successfully received data packets, whose locations are consecutive, in the first PDU set is greater than or equal to an eleventh threshold;
a quantity of bits of unsuccessfully received data packets, whose locations are consecutive, in the first PDU set is less than or equal to a twelfth threshold;
locations of successfully received data packets in the first PDU set are consecutive; and
locations of unsuccessfully received data packets in the first PDU set are consecutive.

50. The receiving device according to any one of claims 45 to 49, wherein the receiving device further comprises a processing unit for:
in a case that the first condition is met, submitting the successfully received data packet to the upper layer by using the first protocol layer; and/or
in a case that the first condition is not met, skipping submitting the successfully received data packet to the upper layer by using the first protocol layer, and/or deleting the successfully received data packet.

51. The receiving device according to any one of claims 44 to 50, wherein the first transmission policy varies with the type of the first PDU set.

52. A sending device, comprising:
a determining unit, for determining a second transmission policy, wherein the second transmission policy is used to determine a transmission manner of transmitting a data packet in a second protocol data unit PDU set to a receiving device, and the second transmission policy is related to a type of the second PDU set.

53. The sending device according to claim 52, wherein the second transmission policy is related to one or more of following information:
a transmission resource of the data packet;
a planned delay range of the data packet; and
a condition for successful transmission of the second PDU set.

54. The sending device according to claim 53, wherein the second transmission policy is related to a transport block TB used for transmitting the data packet and/or a block error rate BLER of the transmission resource.

55. The sending device according to claim 54, wherein if the type of the second PDU set is a first type, the second transmission policy is related to one or more of following:
the TB for transmitting the data packet;
the BLER of the transmission resource; and
the planned delay range of the data packet.

56. The sending device according to claim 55, wherein if the type of the second PDU set is the first type, the second transmission policy comprises one or more of following:
transmitting a plurality of data packets belonging to a same PDU set by using a same TB;
transmitting a plurality of data packets belonging to a same PDU set by using transmission resources that are same in BLER;
if it is anticipated that the sending device is incapable of completing transmission of remaining data packets in the second PDU set within the planned delay range, abandoning transmission of the remaining one or more data packets; and
if a part of data packets in the second PDU set are successfully transmitted and another part of the data packets in the second PDU set are unsuccessfully transmitted, transmitting the unsuccessfully transmitted data packet by using a transmission resource having a first BLER, wherein the first BLER is less than or equal to a BLER of a transmission resource used for a previous transmission of a data packet.

57. The sending device according to claim 53, wherein if the type of the second PDU set is a second type, the second transmission policy is related to one or more of following:
the planned delay range of the data packet; and
the condition for successful transmission of the second PDU set.

58. The sending device according to claim 57, wherein if the type of the second PDU set is the second type, the second transmission policy comprises:
if it is anticipated that the sending device is incapable of completing transmission of remaining data packets in the second PDU set within the planned delay range, continuing transmission of the remaining data packets; or
if it is anticipated that the sending device is incapable of completing transmission of remaining data packets in the second PDU set within the planned delay range, determining, based on the condition for successful transmission of the first PDU set, whether to abandon transmission of the remaining one or more data packets.

59. A terminal device, comprising:
a receiving unit, for receiving first indication information, wherein the first indication information is used to indicate a type of a protocol data unit PDU set;
wherein the first indication information is sent by an application server to the terminal device; and/or
the first indication information is sent by an application layer of the terminal device to an access layer of the terminal device; and/or
the first indication information is sent by a network device to the terminal device.

60. The terminal device according to claim 59, wherein the first indication information is used to indicate a type of a PDU set corresponding to a data radio bearer DRB, and the type of the PDU set corresponding to the DRB is determined based on a type of a PDU set corresponding to a data flow and a correspondence between a data flow and a DRB.

61. The terminal device according to claim 59, wherein the first indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

62. The terminal device according to claim 60 or 61, wherein the type of the PDU set corresponding to the data flow is determined by the application layer of the terminal device and/or the application server.

63. The terminal device according to claim 62, wherein if the type of the PDU set corresponding to the data flow is determined by the application layer of the terminal device, the terminal device further comprises:
a sending unit, for sending second indication information to the network device, wherein the second indication information is used to indicate one or more of following: the type of the PDU set corresponding to the data flow, the type of the PDU set corresponding to the DRB, and the type of the PDU set corresponding to the first protocol entity.

64. The terminal device according to claim 62, wherein if the type of the PDU set corresponding to the data flow is determined by the application server, the receiving unit is for:
receiving the first indication information sent by the network device, wherein the first indication information is used to indicate one or more of following: the type of the PDU set corresponding to the data flow, the type of the PDU set corresponding to the DRB, and the type of the PDU set corresponding to the first protocol entity, and the type of the PDU set corresponding to the data flow is indicated to the network device by the application server.

65. The terminal device according to any one of claims 60 to 64, wherein the type of the PDU set corresponding to the DRB and/or the type of the PDU set corresponding to the first protocol entity are/is determined by one or more of following: a network device, an application layer of a terminal device, and an access layer of a terminal device.

66. The terminal device according to any one of claims 60 to 65, wherein if all PDU sets corresponding to a first DRB are of a first type, the first indication information is used to indicate that a type of the PDU set corresponding to the first DRB is the first type; or
if all PDU sets corresponding to a first DRB are of a second type, the first indication information is used to indicate that a type of the PDU set corresponding to the first DRB is the second type; or
if a part of PDU sets corresponding to a first DRB are of a first type and another part of the PDU sets are of a second type, the first indication information is used to indicate that types of PDU sets corresponding to the first DRB comprise the first type and the second type.

67. The terminal device according to any one of claims 60 to 66, wherein if all PDU sets corresponding to a first protocol entity are of a first type, the first indication information is used to indicate that the type of the PDU set corresponding to the first protocol entity is the first type; or
if all PDU sets corresponding to a first protocol entity are of a second type, the first indication information is used to indicate that the type of the PDU set corresponding to the first protocol entity is the second type; or
if a part of PDU sets corresponding to a first protocol entity are of a first type and another part of PDU sets are of a second type, the first indication information is used to indicate that types of PDU sets corresponding to the first protocol entity comprise the first type and the second type.

68. The terminal device according to any one of claims 59 to 67, wherein the first indication information is carried in a user plane message.

69. The terminal device according to claim 68, wherein the first indication information is carried in one or more of following: a control PDU or a data PDU.

70. The terminal device according to claim 69, wherein the first indication information is carried in a header of the data PDU.

71. The terminal device according to any one of claims 68 to 70, wherein a type of each PDU set in a plurality of PDU sets is indicated by the first indication information, or a type of a PDU set whose type has changed in a plurality of PDU sets is indicated by the first indication information.

72. The terminal device according to any one of claims 59 to 71, wherein the PDU set comprises an uplink PDU set and a downlink PDU set, a type of the uplink PDU set is determined by the application layer of the terminal device, and/or a type of the downlink PDU set is determined by the application server.

73. A network device, comprising:
a receiving unit, for receiving third indication information, wherein the third indication information is used to indicate a type of a protocol data unit PDU set;
wherein the third indication information is sent by an application server to the network device; and/or
the third indication information is sent by a terminal device to the network device.

74. The network device according to claim 73, wherein the third indication information is used to indicate a type of a PDU set corresponding to a data radio bearer DRB, and the type of the PDU set corresponding to the DRB is determined based on a type of a PDU set corresponding to a data flow and a correspondence between a data flow and a DRB.

75. The network device according to claim 73, wherein the third indication information is used to indicate a type of a PDU set corresponding to a first protocol entity, and the type of the PDU set corresponding to the first protocol entity is determined based on a type of a PDU set corresponding to a data flow and a correspondence between a data flow and a first protocol entity.

76. The network device according to claim 74 or 75, wherein the type of the PDU set corresponding to the data flow is determined by an application layer of the terminal device and/or the application server.

77. The network device according to claim 76, wherein if the type of the PDU set corresponding to the data flow is determined by the application layer of the terminal device, the receiving unit is further for:
receiving the third indication information sent by the terminal device, wherein the third indication information is used to indicate one or more of following: the type of the PDU set corresponding to the data flow, the type of the PDU set corresponding to the DRB, and the type of the PDU set corresponding to the first protocol entity.

78. The network device according to claim 76, wherein if the type of the PDU set corresponding to the data flow is determined by the application server, the receiving unit is further for:
receiving the third indication information sent by the application server, wherein the third indication information is used to indicate the type of the PDU set corresponding to the data flow.

79. The network device according to any one of claims 74 to 78, wherein the type of the PDU set corresponding to the DRB and/or the type of the PDU set corresponding to the first protocol entity are/is determined by one or more of following: a network device, an application layer of a terminal device, and an access layer of a terminal device.

80. The network device according to any one of claims 74 to 79, wherein if all PDU sets corresponding to a first DRB are of a first type, the third indication information is used to indicate that a type of the PDU set corresponding to the first DRB is the first type; or
if all PDU sets corresponding to a first DRB are of a second type, the third indication information is used to indicate that a type of the PDU set corresponding to the first DRB is the second type; or
if a part of PDU sets corresponding to a first DRB are of a first type and another part of the PDU sets are of a second type, the third indication information is used to indicate that the types of the PDU sets corresponding to the first DRB comprise the first type and the second type.

81. The network device according to any one of claims 74 to 79, wherein if all PDU sets corresponding to a first protocol entity are of a first type, the first indication information is used to indicate that the type of the PDU set corresponding to the first protocol entity is the first type; or
if all PDU sets corresponding to a first protocol entity are of a second type, the first indication information is used to indicate that the type of the PDU set corresponding to the first protocol entity is the second type; or
if a part of PDU sets corresponding to a first protocol entity are of a first type and another part of the PDU sets are of a second type, the first indication information is used to indicate that types of PDU sets corresponding to the first protocol entity comprise the first type and the second type.

82. The network device according to any one of claims 73 to 81, wherein the third indication information is carried in a user plane message.

83. The network device according to claim 82, wherein the third indication information is carried in one or more of following: a control PDU, and a data PDU in a PDU set.

84. The network device according to claim 83, wherein the third indication information is carried in a header of the data PDU.

85. The network device according to any one of claims 82 to 84, wherein a type of each PDU set in a plurality of PDU sets is indicated by the third indication information, or a type of a PDU set whose type has changed in a plurality of PDU sets is indicated by the third indication information.

86. The network device according to any one of claims 73 to 85, wherein the PDU set comprises an uplink PDU set and a downlink PDU set, a type of the uplink PDU set is determined by an application layer of the terminal device, and/or a type of the downlink PDU set is determined by the application server.

87. A wireless communications apparatus, comprising a memory and a processor, wherein the memory is for storing a program, and the processor is for invoking the program in the memory to cause the apparatus to perform the method according to any one of claims 1 to 8, 9 to 15, 16 to 29, or 30 to 43.

88. An apparatus, comprising a processor for invoking a program from a memory to cause the apparatus to perform the method according to any one of claims 1 to 8, 9 to 15, 16 to 29, or 30 to 43.
